# EUROPÄISCHE PATENTSCHRIFT

(11) **EP 3 909 731 B1**
(45) Veröffentlichungstag und Bekanntmachung des Hinweises auf die Patenterteilung: **28.01.2026**
(21) Anmeldenummer: 21173098.1
(22) Anmeldetag: 10.05.2021
(51) Int. Cl.: B26D 7/30, B26D 5/00, A22C 17/00, B26D 1/14, B26D 1/25, B26D 7/06

(54) **VERFAHREN UND AUFSCHNEIDEMASCHINE ZUM AUFSCHNEIDEN EINER CHARGE VON LEBENSMITTELLAIBEN IN SCHEIBEN**
METHOD AND SLICING MACHINE FOR SLICING A BATCH OF FOOD LOAVES
PROCÉDÉ ET MACHINE À TRANCHER POUR TRANCHER UN LOT DE PAINS ALIMENTAIRES

(30) Priorität: 12.05.2020 DE 102020112863
(43) Veröffentlichungstag der Anmeldung: 17.11.2021
(73) Patentinhaber: TVI Entwicklung und Produktion GmbH, 83052 Bruckmühl (DE)
(72) Erfinder: Mayr, Martin, 83549 Eiselfing (DE); Völkl, Thomas, 83052 Bruckmühl (DE)
(74) Vertreter: Weickmann & Weickmann PartmbB

(56) Entgegenhaltungen:
- DE-A1- 102004 041 915
- DE-A1- 102004 058 873
- DE-A1- 102015 221 907
- DE-A1- 102016 107 849
- DE-A1- 19 604 254
- DE-A1- 19 820 058

## Beschreibung

### I. Anwendungsgebiet

Die Erfindung betrifft das Verbessern der Gewichtgenauigkeit beim Herstellen von möglichst gewichtsgenauen Scheiben oder Portionen aus mehreren Scheiben durch Abschneiden der Scheiben von einem meist länglichen Lebensmittel-Laib, dessen Querschnitt sich jedoch im Ursprungszustand entlang der Länge mehr oder weniger stark ändert, insbesondere einem Fleisch-Laib aus Frischfleisch eines Rindes oder Schweines. Genauer betrifft die Erfindung ein Verfahren mit den Merkmalen des Oberbegriffs von Anspruch 1 und eine Aufschneidemaschine mit den Merkmalen des Oberbegriffs von Anspruch 3.

### II. Technischer Hintergrund

Bei der Herstellung gewichtsgenauer Scheiben und dem anschließenden Abpacken mit auf der Packung angegebenen Nenn-Gewicht (= "Fest-Verpackung") von
- einzelnen Scheiben (Einzelscheiben-Portion) ist für den Hersteller jedes Übergewicht jeder Scheibe ein Verlustfaktor, während
- bei gewichtsgenauen Mehrscheiben-Portionen unter Angabe eines vorgegebenen Nenn-Gewichtes einzelne Scheiben mit Untergewicht einerseits und Übergewicht andererseits ausgleichend zu einer gewichtsgenauen Portion kombiniert werden können und nur das anteilsmäßig in der Regel dann sehr viel geringere Übergewicht der gesamten Mehrscheiben-Portion einen Verlustfaktor darstellt.

Um das Gewicht der abzutrennenden Scheiben steuern zu können, wird der Laib meist durch Verpressen in Längsrichtung und gegebenenfalls auch in Querrichtung, meist in einem stirnseitig vorne und hinten offenen, jedoch umfänglich geschlossenen, sogenannten Formrohr, auf einen über die Länge möglichst gleichbleibenden Querschnitt gebracht.

Dann wird der verpresste Laib mittels des Längspressstempels aus der gegenüberliegenden offenen Stirnseite, dem Schneidende, des Formrohres um eine definierte Vorschubstrecke, also einen Überstand, vorwärts geschoben, meist bis zur Anlage mit Druck an einer Anschlagplatte, und unmittelbar an der vorderen Stirnseite des Formrohres mittels eines Messers eine Scheibe abgetrennt. Die Axialposition des Messers zum Formrohr und dessen vorderer Stirnseite bleibt in der Regel immer unverändert.

Dabei ist klarzustellen, dass die an der Maschine automatisch für jede Scheibe eingestellte Vorschubstrecke, die sogenannte Dickeneinstellung, meist etwas größer ist als der eingestellte Abstand zwischen der Anschlagplatte und der Axialposition des Messers, da sich das vorne aus dem Formrohr überstehende Stück des Laibs seitlich ausdehnt und der sich ergebende Überstand des vorgeschobenen Laibs aus dem Formrohr kürzer wird. Die tatsächliche Scheibendicke, die die Scheibe nach deren Abtrennen, also nachdem sie sich frei ausdehnen kann, besitzt, ist meist etwas größer als der eingestellte Abstand und etwas kleiner als die Dickeneinstellung.

Für die Zwecke der vorliegenden Erfindung wird von einer festen Korrelation zwischen Gewicht und Dicke sowohl der Scheibe als auch des gesamten Laibs ausgegangen, und somit Gewicht und Dicke einer Scheibe quasi gleichgesetzt, also beispielsweise Korrektur-Gewicht und Korrektur-Dicke quasi synonym verwendet, und deshalb auch allgemein als Korrektur-Wert bezeichnet.

Vor dem Aufschneiden eines Laibs wird das Gesamtvolumen und damit das Gesamtgewicht des darin - bei geschlossenem Schneidende - verpressten Laibs automatisch in etwa bestimmt durch Detektion der Position von Längs-Pressstempel und ggfs. Quer-Pressstempel relativ zum Formrohr - insbesondere durch Bestimmen der Ausfahrlänge des jeweiligen Stempels aus einem ArbeitsZylinder - während an den Pressstempeln eine definierte Kraft, die Messkraft, anliegt. Dabei entspricht die Messkraft vorzugsweise der Vorschub-Kraft, mit der der Laib für das Abtrennen von Scheiben mittels des Längs-Pressstempel später schrittweise nach vorne aus dem Formrohr geschoben wird.

Aus dem Gesamtvolumen des Laibs und dem Querschnitt des Formrohres im verpressten Zustand kann automatisch die Soll-Dicke berechnet werden, die alle Scheiben dieses Laibs haben müssten, um - insbesondere ohne Reste in Form von untergewichtigen Scheiben - nur Scheiben zu erzeugen, deren Gewicht mindestens einem vorgegebenen Soll-Gewicht, beispielsweise dem auf dem Etikett der einzelnen abgepackten Scheibe angegebenen Nenn-Gewicht oder einem Bezugs-Gewicht, welches etwas höher als das Nenn-Gewicht sein kann, und welches sich der Hersteller der Packungen selbst intern vorgibt, entspricht.

Es gibt jedoch eine Reihe von Gründen, warum trotz Einstellung der Längsposition des Messers auf eine solche Position, die der Soll-Dicke einer Scheibe des verpressten Laibs entspricht, dennoch die Scheiben nicht das Soll-Gewicht besitzen, insbesondere ihr Gewicht außerhalb eines Toleranzbereiches liegt, insbesondere unterhalb einer Toleranz-Untergrenze dieses Toleranzbereiches.

Ursachen für Untergewicht können sein
- die Tatsache, dass ein solcher Laib seine Ausgangsform - häufig Tonnen-Form mit in seinem mittleren Bereich größter Dicke und größtem Querschnitt oder auch umgekehrt eine Spindel-Form - auch noch im verpressten Zustand qualitativ noch geringfügig erhalten bleibt, also der Formhohlraum z.B. bei Tonnen Form in seinen Endbereichen, also beim Abtrennen der ersten und letzten Scheiben, nicht vollständig hinsichtlich des Querschnittes gefüllt ist,
- dass aufgrund der ungleichen Haftreibung zwischen Laib und Formrohr vor Beginn des Aufschneidens der verpresste Laib mit seinem vorderen Ende den Formrohr-Querschnitt nicht vollständig ausfüllt.

Hinzu kommt, dass die Laibe einer Charge - die in der Regel von der Ursprungsstelle am lebenden Tier jeweils das gleiche Fleischstück darstellen - zwar qualitativ eine ähnliche Form aufweisen, sich aber quantitativ durchaus voneinander unterscheiden können, sodass die bei einem ersten verpressten Laib ermittelten Bearbeitungsparameter nicht ohne Weiteres auf die weiteren nachfolgenden Laibe der gleichen Charge übertragen werden können.

Selbst qualitativ können sich die einzelnen Laibe derselben Charge beim Aufschneiden voneinander unterscheiden, beispielsweise hinsichtlich des spezifischen Gewichtes, des Frostungs-Grades, des Wassergehaltes, vor allem an den Außenflächen und damit der Haftreibung gegenüber dem Formrohr, sowie weiterer Faktoren.

Auch die Betriebsparameter der für das Aufschneiden benutzten Maschine können sich während des Aufschneidens einer Charge von Laiben ändern, beispielsweise durch partielle Erwärmung und Dehnung einzelner Maschinenteile.

Erfindungsgemäß im Vordergrund steht jedoch die Herstellung gewichtsgenauer Einzelscheiben-Portionen, also von Scheiben, von denen jede einzelne auf oder über, aber möglichst nah am, gewählten Sollgewicht, insbesondere einem vom Hersteller der Scheiben intern festgelegten Bezugsgewicht, liegt, insbesondere innerhalb eines existierenden Toleranzbereiches liegt, zumindest oberhalb einer Toleranz-Untergrenze liegt, somit die Vermeidung von Ausschuss-Scheiben. Häufig gelten folgende externe, meist gesetzliche, Bedingungen beim Verkauf von Portionen mit einem angegebenen Nenn-Gewicht, auf dessen Basis - und nicht auf Basis des Ist-Gewichtes - der auf der Packung angegebene Preis ermittelt ist und häufig auch der Hersteller der Packungen mit den Portionen darin entlohnt wird:

### 1. Bedingung:

Der Durchschnitt des Ist-Gewichts aller produzierten Portionen einer Charge mit gleichem angegebenen Nenn-Gewicht muss über dem Nenn-Gewicht liegen.

Bei sehr großen Chargen, deren Aufschneiden mehr als einen Arbeitstag benötigt, kann dies auch zusätzlich für die an jedem einzelnen Arbeitstag aufgeschnittenen Teil-Chargen gelten.

### 2. Bedingung:

Das Ist-Gewicht jeder einzelnen Portion, also bei Einzelscheiben-Portionen jeder einzelnen Scheibe, muss oberhalb einer externen, meist gesetzlichen Toleranz-Untergrenze TU liegen, die beispielsweise bei einem Nenn-Gewicht zwischen 500 g und 1000 g um 15 g unter dem Nenn-Gewicht liegt.

Ist die 2. Bedingung verletzt, ist die entsprechende Portion Ausschuss, ist dagegen die 1. Bedingung verletzt, ist die gesamte produzierte Charge Ausschuss.

Optional vorgegebene, Hersteller-interne Bedingung:
Als 3. Bedingung
soll häufig und auch erfindungsgemäß die Erfüllung der 1. Bedingung auch für Teil-Chargen, insbesondere innerhalb jedes einzelnen Laibs, eingehalten werden.

Es soll also der Durchschnitt des Ist-Gewichts aller aus einem Laib produzierten Scheiben über dem Nenn-Gewicht liegen.

Dabei muss der einzelne Leib erfindungsgemäß nicht unbedingt auch noch restefrei aufgeschnitten werden, obwohl dies der Idealfall wäre. Dies erfordert jedoch größere Toleranzbereiche für das Gewicht der einzelnen Scheiben gegenüber der Variante, dass am Ende des Laibs eine Rest-Scheibe übrig bleiben darf, die außerhalb des Toleranzbereiches liegt, und erhöht in aller Regel auch das give away.

Eine Vorrichtung und ein Verfahren mit den Merkmalen des Oberbegriffs des unabhängigen Vorrichtungs- bzw. Verfahrensanspruchs sind jeweils sowohl aus der DE 102004041915 A1 als auch aus der DE 102016107849 A1 bekannt.

### III. Darstellung der Erfindung

### a) Technische Aufgabe

Es ist daher die Aufgabe gemäß der Erfindung, ein Verfahren sowie eine Vorrichtung für das Aufschneiden von Laiben in gewichtsgenaue Scheiben zur Verfügung zu stellen, bei dem im Idealfall keine einzige Scheibe ein Ist-Gewicht außerhalb des Toleranz-Bereiches, insbesondere unter der Toleranz-Untergrenze, aufweist.

### b) Lösung der Aufgabe

Diese Aufgabe wird durch die Merkmale der Ansprüche 1 und 3 gelöst. Vorteilhafte Ausführungsformen ergeben sich aus den Unteransprüchen.

Diese Aufgabe kann beim Aufschneiden von verpressten, also definiert geformten, Laiben -aus dem beschriebenen umfänglich geschlossenen Formrohr heraus, welches einen konstanten Querschnitt entlang seiner Längserstreckung aufweist - durch die nachfolgend beschriebene Vorgehensweise gelöst werden, was eine entsprechend ausgebildete Aufschneidemaschine mit einer entsprechend ausgebildeten automatischen Steuerung voraussetzt.

Die Dickeneinstellungen für die Scheiben werden automatisch von der Steuerung der Maschine so berechnet und vorgegeben, dass das Gewicht der Scheiben die in die Steuerung eingegebenen Werte einhält.

Soweit nichts Anderes ausgesagt, wird im Folgenden davon ausgegangen, dass für das Aufschneiden als Bezugs-Gewicht das auf der späteren Packung angegebene Nenn-Gewicht und kein höheres, intern festgelegtes, Bezugs-Gewicht gewählt und in die Steuerung eingegeben wird.

Hinsichtlich der Vorgehensweise muss zunächst ermittelt werden, wie viele Scheiben mit mindestens Bezugs-Gewicht aus dem aufzuschneidenden Laib gewonnen werden können, wofür zunächst einmal Gesamt-Gewicht und/oder Gesamt-Volumen des Laibs ermittelt werden sollte, wobei wegen eines unterstellten immer gleichen spezifischen Gewichts - zumindest bei einer Charge von Fleischstücken - jeder dieser beiden Werte aus dem jeweils anderen Wert errechnet werden kann.

Hierfür könnte man den Laib vor dem Aufschneiden einfach wiegen und die maximal erzielbare Anzahl von Scheiben mit einem bestimmten Bezugs-Gewicht daraus errechnen.

Da ein solcher Laib jedoch im Ausgangszustand eine unregelmäßige Form besitzt, insbesondere entlang seiner Haupterstreckungsrichtung keinen konstanten Querschnitt besitzt, müsste man dann zusätzlich an jeder Stelle entlang des Laibs den Querschnitt kennen und die Dicke jeder Scheibe, die zum Erreichen des Bezugs-Gewichtes führt, neu bestimmen und einstellen.

Um dies zu vermeiden, wird der Laib in einem umfänglich geschlossenen Formrohr, dessen Formrohr-Hohlraum über die gesamte Länge einen konstanten Querschnitt besitzt, zumindest in Längsrichtung z.B. mittels eines Längspressstempels so verformt, dass der Laib den inneren Querschnitt des Formrohr-Hohlraumes möglichst an jeder Längsposition vollständig ausfüllt und zu einem gleichmäßigen Strang, also einem Kaliber, welches über seine Länge durchgehend den gleichen Querschnitt besitzt, verformt wird. In Kenntnis der Querschnittsfläche des Formrohr-Hohlraumes und damit des Stranges muss dann lediglich die Dicke der Scheibe festgelegt werden, um eine Scheibe mit einem vorgegebenen Gewicht, etwa dem Bezugs-Gewicht, zu erzielen.

Auch das Volumen des gesamten Laibs kann auf diese Art ermittelt werden, indem im verformten Zustand, wenn also der verformte Laib den Querschnitt des Formrohr-Hohlraumes bereits über die gesamte Länge des Laibs ausfüllt, lediglich noch die Länge des zu einem Strang verformten Laibs ermittelt werden muss. Dies ist durch Bestimmung der Position des Längs-Pressstempels und in Kenntnis der Position des gegenüberliegenden, meist direkt am Schneidende anliegenden, Anschlages beim Längsverpressen leicht und automatisch durchführbar.

Dabei unterliegt der zum Strang verformte Laib einer Messkraft, welche am Längspressstempel anliegt, wobei es sich dabei vorzugsweise um die gleiche Kraft handelt, mit der später beim Aufschneiden der Laib zwischen dem Abtrennen der einzelnen Scheiben über das vordere Ende des Formrohres hinaus um eine definierte Strecke vorwärtsgeschoben und insbesondere gegen einen Anschlag gedrückt wird.

Das Ziel besteht primär darin, dass die einzelnen Scheiben einerseits kein Ausschuss auf Grund von Untergewicht werden und andererseits möglichst wenig Übergewicht z.B. gegenüber dem Bezugsgewicht haben sollen, um den nicht bezahlten sogenannten give away möglichst gering zu halten. Da hierbei der Laib nicht restefrei aufgeschnitten werden muss, kann eine untergewichtige Restscheibe pro Laib verbleiben, die dann anders verwertet werden kann.

Dabei muss aber die fast immer geltende erste Bedingung eingehalten werden, dass zusätzlich auch das Durchschnittsgewicht aller Scheiben z.B. einer Charge von Laiben über einer extern, sei es vom Auftraggeber oder vom Gesetzgeber, vorgegebenen Toleranz-Untergrenze, in der Regel dem Nenn-Gewicht, liegen muss, da sonst die gesamte Charge Ausschuss ist.

Somit wird der Hersteller alles tun, um dieses notwendige Durchschnitts-Gewicht aller Scheiben einzuhalten, und parallel dazu versuchen, dass möglichst wenige Scheiben ein Gewicht unter der externen Toleranz-Untergrenze besitzen, wodurch die einzelne Scheibe zu Ausschuss würde.

Die möglichen Vorgehensweisen und auch die dafür benutzte Schneidemaschine, um die bestehende Aufgabe zu lösen, werden anhand der nachfolgenden Figuren erläutert:

### c) Ausführungsbeispiele

Ausführungsformen gemäß der Erfindung sind im Folgenden beispielhaft näher beschrieben. Es zeigen:
- **Figur 1a** - **d:**: eine Aufschneidemaschine in Prinzip-Darstellung von der Seite betrachtet in unterschiedlichen Phasen des Aufschneidens eines Laibs,
- **Figur 2a, b**:: im Querschnitt zweiteilige Formrohre in verschiedenen Betriebszuständen,
- **Figur 3a**:: einen verpressten Laib in der Seitenansicht, bei dem die daraus herzustellenden Scheiben bereits eingezeichnet sind,
- **Figur 3b**:: ein Gewichtsdiagramm über alle Scheiben verschiedener Laibe bei Gewichtsanpassung relativ zur Bezugsgewicht,

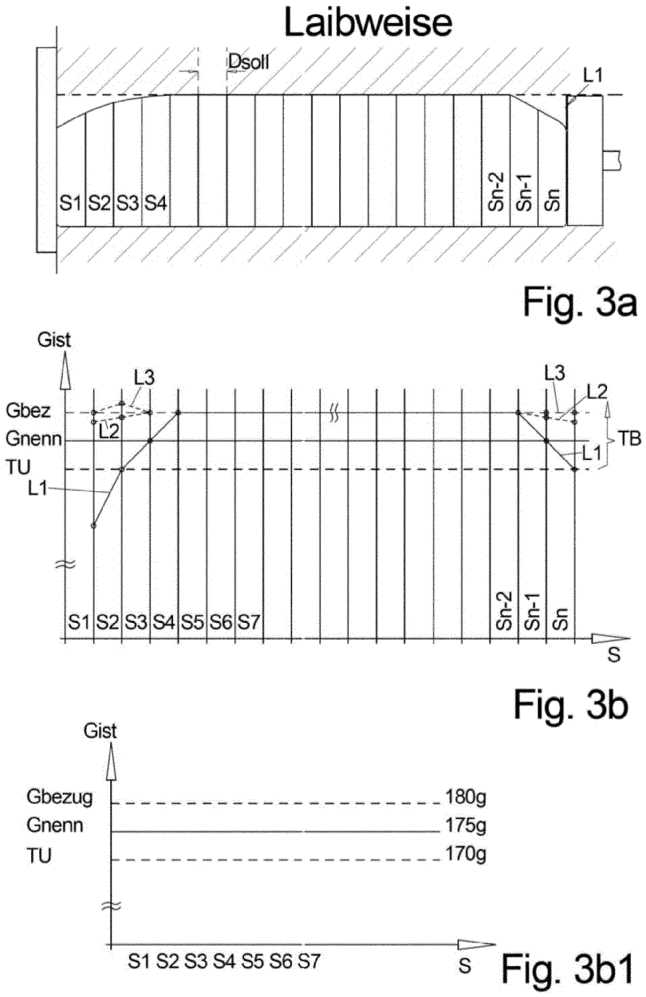

- **Figur 3b1:**: eine Vergrößerung aus Figur 3b,

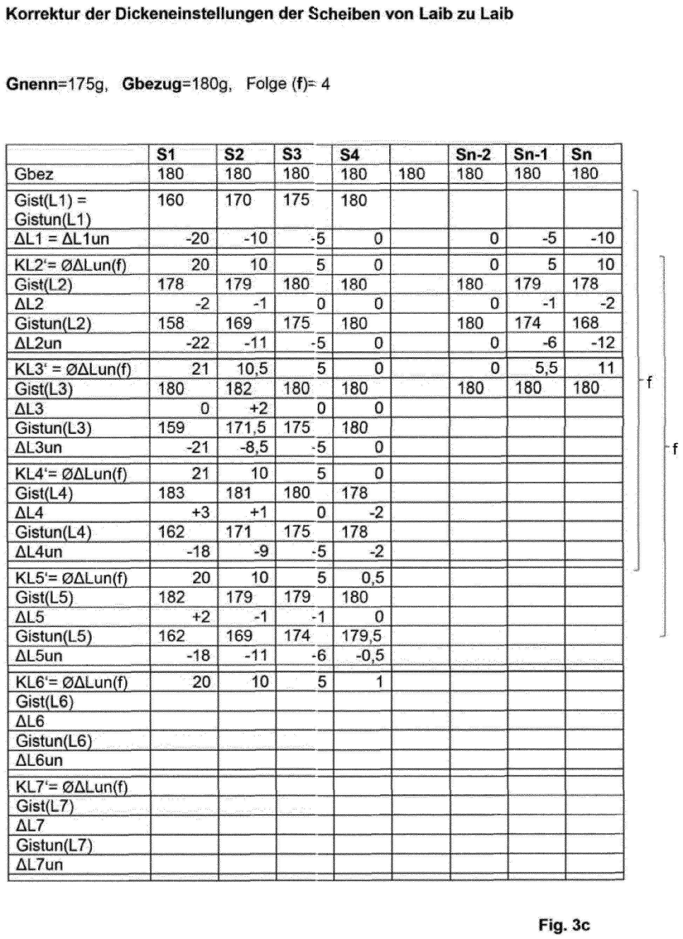

- **Figur 3c:**: eine Tabelle zum erfindungsgemäßen Vorgehen für die laibweise Gewichtsanpassung der Scheiben, wie in Figur 3b grafisch dargestellt,

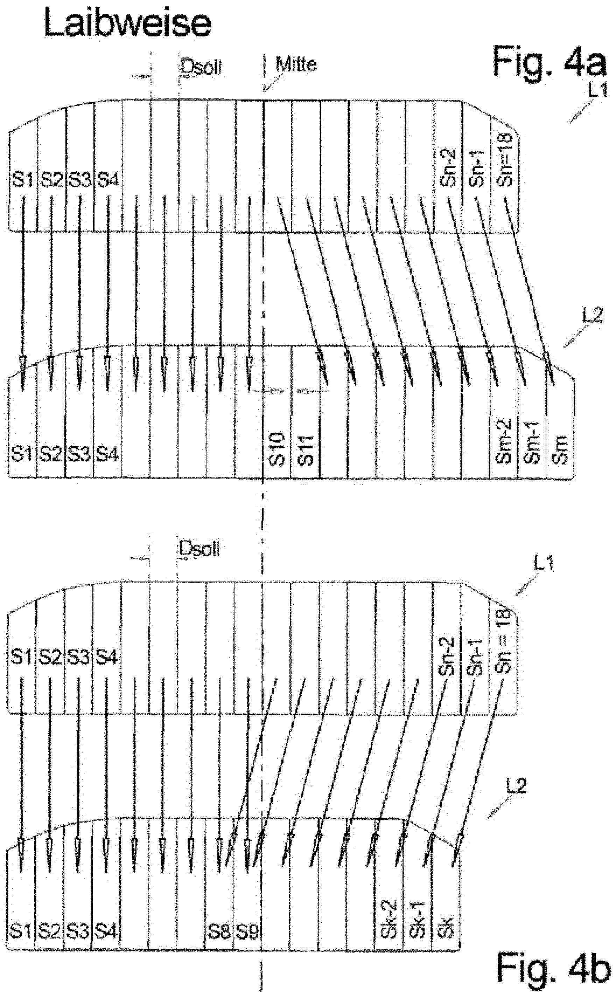

- **Figur 4a:**: die nicht beanspruchte Anwendung von Korrekturwerten auf einen Laib mit mehr Scheiben als der vorangehende Laib,
- **Figur 4b:**: die nicht beanspruchte Anwendung von Korrekturwerten auf einen Laib mit weniger Scheiben als der vorangehende Laib,

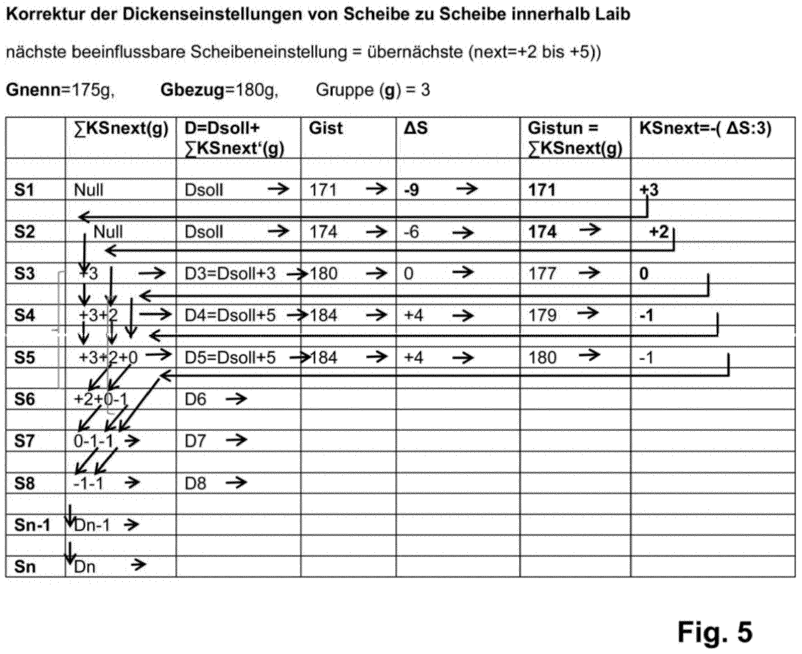

- **Figur 5:**: eine Tabelle zum nicht beanspruchten Vorgehen für die Gewichtsanpassung der Scheiben von Scheibe zu Scheibe innerhalb des gleichen Laibs.

Wie **Figur 3b****1** zeigt, werden dem Hersteller so genannter Fest-Verpackungen einerseits das Nenngewicht **Gnenn** - welches auf der Packung aufgedruckt ist und damit dem Kunden sozusagen zugesichert wird - vorgegeben, und andererseits eine vorgegebene Toleranz-Untergrenze **TU,** wie zuvor beschrieben, in der Regel die Toleranz-Untergrenze für einzelne Scheiben.

Er kann sich für die Steuerung der Dickeneinstellungen **D** selbst ein einzuhaltendes Bezugs-Gewicht **Gbezug** vorgeben, welches beispielsweise direkt das Nenn-Gewicht **Gnenn** ist. Wenn dann jedoch der Durchschnitt der Ist-Gewichte **Gist** aller Scheiben **S1** - **Sn** einer Charge nur geringfügig unter diesem Nenn-Gewicht **Gnenn** liegt, ist die gesamte produzierte Charge an Scheiben Ausschuss.

Deshalb wird häufig als intern vorgegebenes Bezugs-Gewicht **Gbezug** ein etwas höheres Gewicht als das Nenn-Gewicht **Gnenn** gewählt, um dieses Risiko zu minimieren, wie in **Figur 3b und 3b****1** dargestellt.

### Laibweise Korrektur der Dickeneinstellungen gemäß der Figuren 3a - c:

Da man davon ausgeht, dass die Laibe **L1** bis **Lz** einer Charge ähnlich sind, wird versucht, die aufgrund einer vorausgehenden Folge **f** von Laiben einer Charge von Laiben ermittelten Ist-Gewichte **Gist** der einzelnen Scheiben **S1** bis **Sn** des Laibs von der ersten **S1** bis zur letzten Scheibe **Sn** für die nächsten aufzuschneidenden Laibe **L2, L3** so zu korrigieren, dass nach Möglichkeit alle Scheiben **S1** bis **Sn** aller nachfolgenden Laibe **L2, L3** usw. die oben genannten mindestens zwei Gewichts-Bedingungen, vorzugsweise auch die dritte interne Bedingung, einhalten.

Zu diesem Zweck wird der erste Laib **L1** einer Charge von Laiben in Scheiben **S1** bis **Sn** mit vorgegebenen Dickeneinstellungen aufgeschnitten, in der Regel der gleichen Dickeneinstellung **Dsoll** für alle Scheiben **S1** bis **Sn,** die theoretisch zu dem Bezugs-Gewicht **Gbezug** oder Nenn-Gewicht **Gnenn** aller Scheiben **S1** bis **Sn** führen sollte. Die Scheiben **S1** bis **Sn** werden einzeln gewogen.

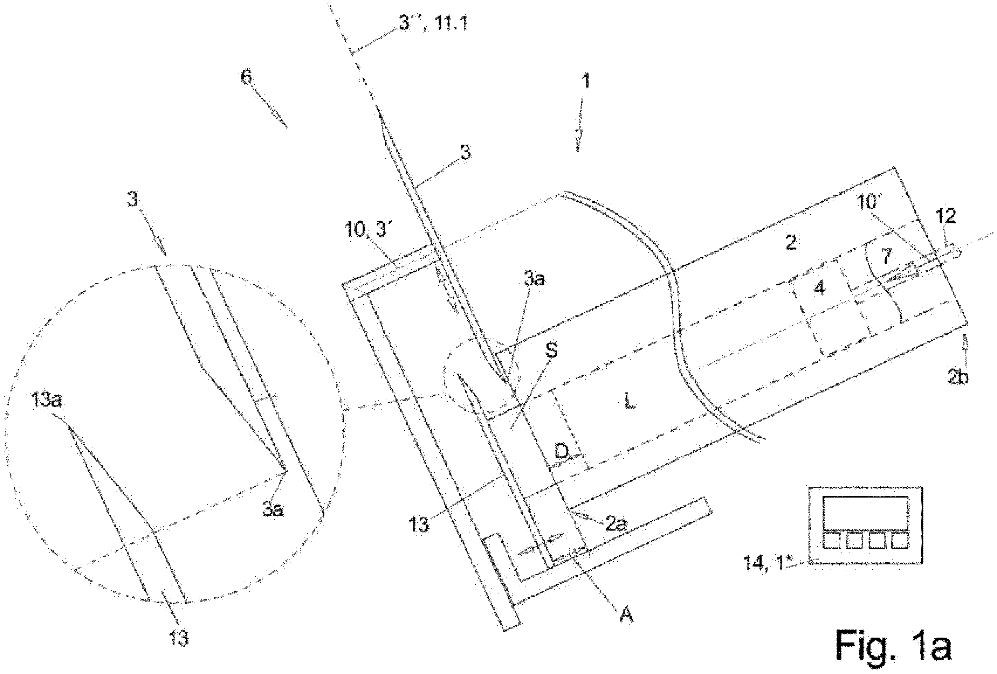

Wie **Figur 3a** i.V.m. **Figur 1a** zeigt, füllt auch ein - in diesem Fall von einem Längspressstempel **4** gegen eine Anschlagplatte **13** - verpresster Laib **L1** den Hohlraum des Formrohres **2** gerade am Anfang und Ende nicht immer wie gewünscht aus. Schneidet man dann alle Scheiben mit der rechnerisch richtigen Dicken-Einstellung **Dsoll** auf, die theoretisch mindestens zum Bezugs-Gewicht **Gbezug** führen sollte, wären die ersten Scheiben **S1, S2, S3** sowie die letzten Scheiben **Sn-1, Sn** dennoch untergewichtig.

**Figur 3b** zeigt qualitativ die Gewichte der Scheiben **S1** bis **Sn** unterschiedlicher, aufeinanderfolgender, aufzuschneidender Laibe **L1** bis **L3,** die in diesem Fall - auch noch im verpressten Zustand - eine leichte Tonnen-Form aufweisen, sodass dort primär die Dickeneinstellungen für die ersten und letzten Scheiben des Laibs **L** korrigiert werden sollten:
Dabei besteht der Grundgedanke darin, für diejenigen Scheiben **S1** - **Sn,** also Scheiben-Nummern **S1** - **Sn,** eines Laibs, die ein Differenzgewicht gegenüber dem Bezugsgewicht Gbezug aufwiesen, vor dem Aufschneiden des nächsten Laibs, z.B. **L2,** Laib-Korrekturgewichte z.B. **KL2** und entsprechende Laib-Korrekturdicken z.B. **KL2'** für die analogen einzelnen Scheiben des nächsten Laibs zu ermitteln und die Dicken-Einstellungen für die einzelnen Scheiben des nächsten Laibs vor dessen Aufschneiden um diese Laib-Korrekturdicken zu korrigieren mit dem Ziel, dass dann deren Ist-Gewichte Gist das Bezugsgewicht **Gbezug** erreichen oder überschreiten, und zwar im gesamten Laib.

Dabei lagen gemäß **Figur 3b** die ersten drei Scheiben sowie die letzten zwei Scheiben des ersten aufgeschnitten Laibs **L1** noch unterhalb dieses Bezugsgewichts **Gbezug,** davon jedoch nur die ersten beiden sowie die letzte unterhalb des Nenngewichts Gnenn, und nur die erste unterhalb der Toleranz-Untergrenze **TU.**

Dagegen lagen bereits beim 2. Laib **L2** sowie den folgenden Laiben aufgrund der Laib-Korrekturwerte alle Scheiben oberhalb des Nenngewichts **Gnenn.**

Wie vorstehend erläutert, gibt es einen festen Zusammenhang aufgrund eines unterstellten, bekannten spezifischen Gewichtes zwischen einer Korrekturdicke **KL',** und einem Korrekturgewicht **KL,** die somit synonym verwendet werden können als Korrekturwert.

In **Figur 3c** ist das konkrete Vorgehen bei der Ermittlung der Laib-Korrekturgewichte, vertikal von oben nach unten in der jeweiligen Spalte, dargestellt, wobei es insbesondere keine Auswirkung von einer Scheibennummer zur nächsten innerhalb des gleichen Laibs gibt.

Es wird davon ausgegangen, dass gemäß **Figur 3b****1** auf den einzeln zu verpackenden Einzelscheiben-Portionen ein Nenngewicht **Gnenn** von 175 g aufgedruckt werden soll, weshalb der Verarbeiter der Steuerung der Maschine vorsichtshalber ein Bezugsgewicht **Gbezug** von 180 g vorgegeben hat, um sicher oberhalb einer externen Toleranz-Untergrenze **TU** von 170 g zu liegen.

Vor dem Aufschneiden des 1. Laibs L1 wurde aus dem beim Verpressen dieses 1. Laibs ermittelten Gewicht sowie der axialen Länge des 1. Laibs **L1** eine für den gesamten Laib L1 gleiche Dickeneinstellung **Dsoll(L1)** ermittelt, also eine Dickeneinstellung zum Aufschneiden der Scheiben, bei der das Gewicht jeder Scheibe rechnerisch danach dem Bezugsgewicht **Gbezug** entsprechen sollte.

Mit dieser Dickeneinstellung **Dsoll(L1)** als gleicher Start-Dickeneinstellung für alle Scheiben wird der 1. Laib L1 aufgeschnitten und die Ist-Gewichte **Gist(L1)** der einzelnen Scheiben **S1** bis **Sn** des 1. Laibs **L1** ermittelt sowie deren Differenzgewichte **ΔL1** zum Bezugsgewicht **Gbezug.**

Für den nachfolgenden 2. Laib **L2** wird für jede Scheibennummer **S1** bis **Sn** einzeln ein Laib-Korrekturgewicht **KL2** ermittelt, die diesem Differenzgewicht, jedoch mit umgekehrtem Vorzeichen, entspricht.

Auch vor dem Aufschneiden des 2. Laibs **L2** wird aus dem beim Verpressen dieses 2. Laibs ermittelten Gewicht sowie der axialen Länge des 2. Laibs **L2** eine für den gesamten Laib **L2** gleiche Dickeneinstellung **Dsoll(L2)** ermittelt, bei der das Gewicht jeder Scheibe rechnerisch danach dem Bezugsgewicht **Gbezug** entsprechen sollte.

Diese Dickeneinstellung **Dsoll(L2)** des 2. Laibs **L2** wird nun für jede Scheibe **S1** bis **Sn** um eine dem Laib-Korrekturgewicht KL2 entsprechende Korrektur-Dicke **KL2'** dieser Scheibennummer verändert und mit diesen korrigierten Dickeneinstellungen **D1 bis Dn** der 2. Laib **L2** aufgeschnitten, die Scheiben verwogen und deren Ist-Gewichte **Gist(L2)** ermittelt.

Dabei kann die Umrechnung des anhand des vorhergehenden, 1. Laibs ermittelten Laib-Korrekturgewichts **KL2** für den 2., nachfolgenden Laib **L2** in eine entsprechende Korrektur-Dicke **KL2'** automatisch erfolgen aufgrund des beim Verpressen ermittelten Gewichts und Volumens inklusive der axialen Länge des neuen Laibs **L2,** sodass klar ist, welchem Gewicht eine axiale Längeneinheit, zum Beispiel 1 mm in Längsrichtung dieses neuen Laibs **L2,** entspricht.

Aufgrund der korrigierten Dickeneinstellungen ist das Differenzgewicht **ΔL2** zwischen den Ist-Gewichten **Gist(L2)** des 2. Laibs und dem Bezugsgewicht **Gbezug** nun meist geringer als bei den ersten Scheiben des 2. Laibs, nämlich nur noch bei der 1. und 2. Scheibe geringfügig unter dem Bezugsgewicht **Gbezug,** und beide Scheiben liegen bereits oberhalb der Toleranz-Untergrenze **TU.**

Beabsichtigt ist, die Dickeneinstellungen für den nächsten aufzuschneidenden Laib in Kenntnis der Ist-Gewichte der Scheiben nicht nur eines, sondern einer begrenzten Folge **f** von vorangehenden Laiben, in diesem Fall **f** = 4 vorangehenden Laiben **Lx-4 bis Lx-1,** vor dem Aufschneiden des nächsten Laibs **Lx** zu korrigieren.

Das Laib-Korrekturgewicht **KLx** jeder Scheibennummer, z.B. **KLx(S2),** soll dabei dem Durchschnitt der Differenzgewichte **ΔLun(f)** der Ist-Gewichte **Gist** der analogen Scheiben der vorhergehenden Laibe **Lx-4 bis Lx-1** dieser Folge **f** = 4 gegenüber dem Bezugsgewicht **Gbezug** - natürlich wieder mit umgekehrtem Vorzeichen - entsprechen, die diese Scheiben aufgewiesen hätten, wenn sie nicht bereits mit korrigierten Dickeneinstellungen aufgeschnitten worden wären, also die sie bei der rechnerischen Dickeneinstellung **Dsoll** des jeweiligen Laibs **Lx-4 bis Lx-1** gehabt hätten.

Deshalb werden ab dem 2. Laib einer Charge für die aufgeschnittenen Scheiben eines Laibs auch jeweils die unkorrigierten Ist-Gewichte, z.B. **Gistun(L2),** jeder Scheibe ermittelt und daraus die unkorrigierten Differenzgewichte, z.B. **ΔL2un**, deren Durchschnitt über die vorangehende Folge **f** das Laib-Korrekturgewicht z.B. **KL3** für jede Scheibe einzeln für den nachfolgend aufzuschneidenden Laib z.B. **L3** ergibt.

Das unkorrigierte Ist-Gewicht **Gistun** wird ermittelt, indem vom Ist-Gewicht **Gist** das Korrekturgewicht **KLx** dieser Scheibe abgezogen wird:
Gemäß **Figur 3c** hatte die 1. Scheibe S1 des 2. Laibs L2 nach einer vorherigen Korrektur der Dickeneinstellung um, also entsprechend, 20 g nach oben ein Ist-Gewicht **Gist(L2)** von 178 g. Das unkorrigierte Ist-Gewicht **Gistun(L2)** beträgt somit 178 - 20 = 158 g.

Das Laib-Korrekturgewicht z.B. **KLx** ist vorzugsweise der Mittelwert der bei der dieser Scheibe vorangehenden Folge **f** von Laiben **Lx-4 bis Lx-1** bei dieser Scheibe z.B. **S1** angefallenen unkorrigierten Differenzgewichte **ΔL(x-4)un** bis **ΔL(x-1)un** mit geändertem Vorzeichen.

Da das Ist-Gewicht des 1. aufgeschnittenen Laibs **L1** mit der Start-Dickeneinstellung, also ohne Korrekturgewicht, ermittelt wurde, ist bei dem 1. Laib **L1** das Ist-Gewicht **Gist(L1)** einer bestimmten Scheibe, z.B. **S1,** gleichzeitig das unkorrigierte Ist-Gewicht z.B. **Gistun(L1)** und das Differenzgewicht **ΔL1** jeder Scheibe gleichzeitig deren unkorrigiertes Differenzgewicht **ΔL1un.**

Da beim Ermitteln der Laib-Korrekturgewichte **KL3** und Laib-Korrekturdicken **KL3'** die vorangehende Folge von aufgeschnittenen Laiben nur zwei Laibe umfasste und die für eine Folge **f** festgesetzte Obergrenze von **f** = 4 nicht erreicht hat, werden für die Ermittlung des Laib-Korrekturgewichts **KL3'** lediglich die unkorrigierten Differenzgewichte **ΔL1un** , **ΔL2un** der beiden vorangegangenen Laibe **L1, L2** von den entsprechenden Scheiben gemittelt und mit umgekehrtem Vorzeichen als Laib-Korrekturgewichte **KL3** verwendet.

Analog werden für die Ermittlung der korrekten Laib-Korrekturdicken **KL4'** einer bestimmten Scheibe, z.B. **S1,** für den 4. Laib die unkorrigierten Differenzgewichte **ΔL1un**, **ΔL2un**, **ΔL3un** dieser Scheiben des 1. bis 3. Laibs gemittelt, anhand der Abmessungen und des Gewichts dieses nächsten Laibs **L4** daraus die Laib-Korrekturdicken **KL4'** errechnet und das Vorzeichen geändert. Die für diesen nächsten Laib **L4** ebenfalls ermittelte rechnerische Dickeneinstellung **Dsoll(L4)** wird dann scheibenweise wiederum um die entsprechenden Laib-Korrekturdicken **KL4'** korrigiert.

Geht man analog weiter vor, so werden für die Ermittlung des Laib-Korrekturgewichtes **KL6** bzw. der Laib-Korrekturdicke **KL6'** für den 6. Laib **KL6** nur noch die unkorrigierten Differenzgewichte dieser Scheibennummer des 2. bis 5. Laibs verwendet, für die Ermittlung des Laib-Korrekturgewichtes **KL7** bzw. der Laib-Korrekturdicke **KL7'** für den 7. Laib **KL7** nur noch die unkorrigierten Differenzgewichte des 3. bis 6. Laibs und so fort.

Da somit nur eine begrenzte Anzahl vorausgehender Laibe und deren unkorrigierte Ist-Gewichte der Scheiben berücksichtigt werden, können langfristige Veränderungen während des Aufschneidens einer Charge von Laiben abgebildet werden und auch aufgetretene einmalige Ausreißer in Form von Laiben mit sehr starken Differenzgewichten der aufgeschnittenen Scheiben werden nur über eine begrenzte Anzahl von nachfolgenden Laiben berücksichtigt.

Diese Berücksichtigung der Ist-Gewichte der analogen Scheibennummern von vorausgegangenen Laiben findet über alle Scheibennummern **S1** bis **Sn** eines Laibs statt, und führt bei tonnenförmigen Laiben in der Regel auch bei den letzten Scheiben **Sn-3** bis **Sn** in den ersten Laiben einer Charge zu Laib-Korrekturdicken **KL2', KL3'.**

Im vorliegenden Fall bewirkt dieses Vorgehen, dass bereits beim Aufschneiden des 2. Laibs **L2** die Ist-Gewichte **Gist** aller Scheiben eines Laibs auf oder oberhalb der Toleranz-Untergrenze **TU** lagen und ab dem 3. Laib **L3** auch das Bezugsgewicht **Gbezug** erreichten.

Es kann sein, dass ein Laib statt der in **Figur 3a** dargestellten Tonnenform eine Spindelform aufweist, und dadurch insbesondere die Scheiben am vorderen und hinteren Ende bei Aufschneiden mit der rechnerisch richtigen dicken Einstellung **Dsoll** diese ein Ist-Gewicht besitzen, welches oberhalb einer - beispielsweise vom Verarbeiter selbst gewählten - Obergrenze **TO** liegt. Dann wären die sich ergebenden Laib-Korrekturwerte dieser 1. und letzten Scheiben negative Korrekturwerte.

In der Praxis wird jedoch meist nur versucht, ein Untergewicht zu vermeiden, denn bei einem Übergewicht der Scheibe - selbst wenn es eine verbindlich vorgegebene Toleranz-Obergrenze **TO** geben sollte - wird vor dem Verpacken in der Regel manuell das Übergewicht von der Scheibe abgeschnitten und anderweitig verwertet. Diese Abschnitte summieren sich meist erst bei 10 bis 20 auf diese Art und Weise übergewichtigen Scheiben auf das Gewicht einer ganzen Scheibe, so dass_dieser wirtschaftliche Verlust wesentlich geringer ist als immer wieder der Verlust ganzer Scheiben als Ausschuss.

Statt einer gleichen Start-Dickeneinstellung für das Aufschneiden aller Scheiben eines 1. Laibs **L1** können für diesen 1. Laib **L1** auch konkrete scheibenweise Dickeneinstellungen **D1** bis **Dn** oder scheibenweise Korrekturdicken **ΔL1**, um den die Start-Dickeneinstellung korrigiert werden soll, vorgegeben werden, beispielsweise basierend auf Erfahrungswerten bei früheren Chargen.

Falls als Bezugsgewicht **Gbezug** ein solches nahe der Toleranz-Untergrenze **TU** oder gar diese selbst gewählt wird, kann für die Berechnung des Korrekturgewichtes der Durchschnittswert aus den unkorrigierten Differenz-Gewichten der Folge vorausgehender Laibe mit einem Faktor multipliziert werden, der mindestens 1,0 beträgt, jedoch maximal 1,5, besser maximal 1,3, besser maximal 1,2, um ein Überschreiten der Ist-Gewichte Gist der Scheiben über die Toleranz-Untergrenze **TU** hinaus sicherzustellen.

Falls als Bezugsgewicht **Gbezug** das Nenngewicht **Gnenn** oder ein Gewicht gewählt wird, das näher am Nenngewicht liegt als an der Toleranz-Untergrenze **TU,** so kann für die Berechnung des Korrekturgewichtes der Durchschnittswert aus den unkorrigierten Differenz-Gewichten **ΔLun** der Folge vorausgehender Laibe mit einem Faktor multipliziert werden, der zwischen 0,5 und 2,0 liegt, um ein Überschreiten der Toleranz-Untergrenze **TU** durch die Ist-Gewichte sicherzustellen.

### (Restefrei aufschneiden)

Diese Veränderung, insbesondere Steigerung, der vorgegebenen Dickeneinstellungen für manche Scheiben von einem Laib zum nächsten ist solange unkritisch, solange die Gesamtlänge des verpressten Laibs gleich oder größer der Summe dieser veränderten Dicken über alle Scheiben eines Laibs ist, also insbesondere ohne das Erhöhen der vorgegebenen Dicken eine Restscheibe übrig geblieben wäre.

Will man einen Laib dagegen **restefrei** aufschneiden, so wurden ja bereits die für das Aufschneiden des 1. Laibs vorgegebenen Dickeneinstellungen für die einzelnen Scheiben, insbesondere die für alle Scheiben gleiche rechnerische dicken Einstellung **Dsoll,** so festgelegt, dass keine Restscheibe mehr übrig bleiben sollte.

Wenn dann die vorgegebenen Dickeneinstellungen mancher Scheiben erhöht werden, würde die Summe der vorgegebenen Dickeneinstellungen die Gesamtlänge des Laibs überschreiten.

Um dies zu vermeiden wird optional versucht, bei den Scheiben-Nummern, bei denen bei den bisher aufgeschnitten Laiben kein positiver Laib-Korrekturwert auftrat und berücksichtigt wurde, einen negativen Laib-Korrekturwert festzulegen, also die Dickeneinstellungen für diese Scheiben zu verringern, so dass die Summe der Dickeneinstellungen aller Scheiben wieder der Gesamtlänge des Laibs entspricht.

Dies insbesondere nur bei solchen Scheibennummern, die auch unter Berücksichtigung dieses negativen Laib-Korrekturwertes dann nach wie vor hinsichtlich ihres dann voraussichtlichen Ist-Gewichts oberhalb des Bezugsgewichtes, also etwa des Nenn-Gewichts oder der Toleranz-Untergrenze, liegen.

### (Unterschiedliche Scheibenanzahl pro Laib)

Bei den bisherigen Ausführungen war gedanklich davon ausgegangen worden, dass alle verpressten Laibe den gleichen Querschnitt besitzen. Da bei Vorhandensein eines Quer-Pressstempels, also Durchführung einer Querverpressung, diese in aller Regel kraftgesteuert durchgeführt wird, ergeben sich für die einzelnen verpressten Laibe jedoch unterschiedliche Querschnitte.

Da die einzelnen Laibe auch ein unterschiedliches Gewicht besitzen, kann zusätzlich oder stattdessen auch die Anzahl der Scheiben, die aus den verschiedenen Laiben hergestellt werden können und ein Soll-Gewicht besitzen, unterschiedlich sein.

Bei unterschiedlichen Querschnitten, jedoch insbesondere gleicher Scheibenanzahl zweier aufeinanderfolgender aufzuschneidender Laibe wird optional der sich aus einer bestimmten Scheibennummer des vorangehenden Laibs ergebende Laib-Korrekturwert auf die gleiche Scheibennummer des nachfolgenden aufzuschneiden Laibs angewandt. Dem liegt die Überlegung zu Grunde, dass aufgrund der qualitativ gleichen Formgebung der Laibe trotz eventuell anderer Größe des Querschnitts die gleichen Abweichungen in den Bereichen bestimmter Scheiben-Nummern auftreten werden.

Bei gemäß **Figur 4a****, b** unterschiedlicher Scheibenanzahl zweier aufeinanderfolgender aufzuschneidender Laibe muss geklärt werden, wie die Zuordnung der Laib-Korrekturgewichte der Scheibennummern vom vorausgehenden zum nachfolgenden Laib erfolgt.

Dies geschieht insbesondere so, dass bis zu einem mittleren Bereich der Scheibennummern, insbesondere bis zur Mitte der Scheibennummern, des vorhergehenden Laibs die sich daraus ergebenden Laib-Korrekturwerte der gleichen Scheiben-Nummer des nachfolgenden Laibs zugewiesen und auf diesen angewandt werden. Bei einer ungeraden Scheibenanzahl des vorhergehenden Laibs wird auch mit der mittleren Scheibennummer so verfahren.

Ab diesem Bereich, insbesondere der Mitte der Scheibennummern des vorhergehenden Laibs erfolgt die Zuweisung vom vorhergehenden auf den nachfolgenden Laib von der jeweils letzten Scheiben-Nummer ausgehend, also der sich aus der letzten Scheibe des vorhergehenden Laibs sich ergebende Korrekturwert wird auf die letzte Scheibe des nachfolgenden Laibs angewandt, und ebenso wird für die vorletzte, vor-vorletzte Scheibe und so weiter vorgegangen.

Damit können sich zwei unterschiedliche Situationen ergeben:
**Figur 4a** zeigt den Fall, dass der nachfolgende Laib eine höhere Scheibenanzahl aufweist als der vorhergehende, wobei in diesem Fall der nachfolgende Laib zwei Scheiben mehr aufweist.

Gemäß obenstehender Vorgehensweise wird dann den beiden mittleren Scheiben-Nummern z.B., **S10** und **S11** des nachfolgenden Laibs kein Laib-Korrekturwert direkt von einer Scheibennummer des vorhergehenden Laibs mehr zugewiesen.

Stattdessen wird für die jeweils äußerste dieser bisher unkorrigierten Scheibennummern der Laib-Korrekturwert von der zum nächstliegenden Laib-Ende hin benachbarten Scheibennummer übernommen und so zur Mitte des nachfolgenden Laibs hin fortgeschritten, bis alle bisher unkorrigierten Scheibennummern einen Laib-Korrekturwert zugewiesen bekommen haben.

Wenn gemäß **Figur 4b** der nachfolgende Laib eine geringere Scheibenanzahl besitzt als der vorangehende Laib, werden nach der oben beschriebenen Vorgehensweise der Nummernzuordnung Scheiben im mittleren Bereich des nachfolgenden Laibs, hier den Scheiben **S8** und **S9,** je zwei Laib-Korrekturwerte aus Scheiben-Nummern des vorhergehenden Laibs zugewiesen.

In diesem Fall wird auf jede dieser Scheiben, hier **S8** und **S9,** jeweils der Mittelwert aus den beiden der jeweiligen Scheibe **S8** oder **S9** zugewiesenen Laib-Korrekturwerten angewandt.

### (korrigierte L1-Einstellung)

Will man vermeiden, dass **vor allem beim ersten Laib L1** einer Charge **L1 bis Lz** eine Scheibe, insbesondere eine der ersten Scheiben **S1, S2....** und/oder eine der letzten Scheiben **Sn-1, Sn** Untergewicht besitzt und damit Ausschuss ist, kann bereits für das Aufschneiden des ersten Laibs **L1** die vorgegebene Dickeneinstellung **D1** bis **Dn** für die einzelnen Scheiben **S1** - **Sn** ausgehend von der errechneten Soll-Dicke **Dsoll** durch Erhöhen um Laib-Korrekturwerte **KL1** erhöht werden, die beispielsweise aus der Erfahrung beim Aufschneiden anderer Chargen derselben Fleischstücke hinsichtlich ihrer Position am Tier ermittelt wurden oder auf anderen Erfahrungswerten beruhen.

### Einhalten des Durchschnittsgewichts über die gesamte Charge:

Optional wird auch überprüft, ob der Durchschnitt **ØΣGist** der Ist-Gewichte **Gist** der bisher hergestellten Scheiben aus der Charge über dem Nenn-Gewicht **Gnenn,** liegt, und wenn nicht, das bisher aufgelaufene Fehl-Gewicht bestimmt wird, insbesondere durch Aufsummieren der bisherigen Differenzgewichte der einzelnen Scheiben gegenüber dem Bezugsgewicht, insbesondere dem Nenn-Gewicht **Gnenn.** Anschließend werden Maßnahmen getroffen, um bis zum Ende der Charge das aufgelaufene Fehlgewicht wieder auszugleichen, wozu insbesondere das Bezugsgewicht **Gbezug** verändert, insbesondere erhöht, wird.

Die Erhöhung des Bezugsgewichts **Gbezug** kann so durchgeführt werden, dass diese Erhöhung über die Anzahl der noch aufzuschneidenden Laibe dieser Charge das bisher aufgelaufene Fehlgewicht rechnerisch mindestens ausgleicht oder vorzugsweise um mindestens ein Prozent, besser mindestens 2 %, besser mindestens 3 % übertrifft.

Gleichzeitig soll das aufgelaufene Fehlgewicht über den Rest der Charge um nicht mehr als 6 %, besser nicht mehr als 5 %, besser nicht mehr als 4 % durch diese Maßnahmen überschritten werden, also überkompensiert werden, um die Verluste für den Verarbeiter im Rahmen zu halten.

Beide Maßnahmen werden vorzugsweise während des Aufschneidens der restlichen Charge überprüft, insbesondere nach dem Aufschneiden jedes weiteren Laibs überprüft und bei negativem Prüfergebnis, also wenn ein Ausgleich des aufgelaufenen Fehlgewichtes bis zum Ende der Charge rechnerisch nicht mehr erreicht wird, die Erhöhung des Bezugsgewichts **Gbezug** nochmals vergrößert oder verringert, bis dies rechnerisch erreicht wird.

Ist der Durchschnitt **ØΣGist** der Ist-Gewichte **aller** bisher hergestellten Scheiben dieser Charge dauerhaft, beispielsweise auch noch nach mehr als 10, oder auch noch nach mehr als 20 Laiben unter dem Bezugsgewicht **Gbezug,** so müssen Maßnahmen getroffen werden, um die Ist-Gewichte der noch aufzuschneidenden Scheiben, also der restlichen Laibe der Charge, so zu erhöhen, dass der Durchschnitt aller aus der gesamten Charge hergestellten Scheiben noch über dem Bezugsgewicht **Gbezug,** insbesondere dem Nenn-Gewicht **Gnenn,** liegt.

Zu diesem Zweck kann für die restlichen aufzuschneidenden Scheiben beispielsweise das Bezugsgewicht **Gbezug** erhöht werden oder die Toleranz-Untergrenze **TU** erhöht werden, wobei die Erhöhung unter Berücksichtigung der noch zur Verfügung stehenden restlichen Laibe so erfolgen muss, dass über die voraussichtliche Anzahl noch herzustellender Scheiben aus dieser Charge durch diese Erhöhung das bisher aufgelaufene Fehlgewicht kompensiert, besser überkompensiert, werden kann, vorzugsweise um mindestens 1 %, besser um mindestens 2 %, besser um mindestens 3 % überkompensiert werden kann, jedoch vorzugsweise um nicht mehr als 6 %, besser um nicht mehr als 5 %, besser um nicht mehr als 4 %.

Vorzugsweise wird während des Aufschneidens der restlichen Laibe mehrfach, insbesondere nach dem Aufschneiden jedes weiteren Laibs, die Überprüfung wiederholt, ob eine solche Kompensation voraussichtlich erreicht werden kann und bei negativem Ergebnis der Überprüfung die Erhöhung so vergrößert, dass die Kompensation für die restlichen aufzuschneidenden Laibe voraussichtlich erreicht werden kann.

### Einhalten des Durchschnittsgewichts auch innerhalb eines Laibs:

Aufgrund der - wenn auch begrenzten - Unterschiede zwischen den einzelnen Laiben **L1, L2...** können Rückschlüsse aus den Ist-Gewichten **Gist** der Scheiben **S1** - **Sn** eines aufgeschnittenen vorhergehenden Laibs **Lx-1** nur bedingt eine Optimierung beim Aufschneiden eines nachfolgenden Laibs **Lx** bewirken, beispielsweise weil die Toleranzuntergrenze **TU** für das Ist-Gewicht **Gist** der Scheiben **S1** - **Sn** relativ hoch liegt, etwa bei 94% des Nenn-Gewichts **Gnenn,** und somit die Schwankungsbreite von Laib zu Laib höher sein kann als dieser Abstand.

Stattdessen oder ergänzend hierzu, insbesondere bei den ersten Laiben einer Charge, ist es sinnvoll, eine Korrektur der vorgegebenen Dickeneinstellungen **D1, D2, D3**....für das Abtrennen von Scheiben **S1, S2, S3**.....von einer Dickeneinstellung z.B. **D1** zur nächsten noch hinsichtlich ihrer Dickeneinstellung beeinflussbaren Scheibe z.B. **D2** oder **D3** schon innerhalb primär einer kleineren Teil-Charge, insbesondere ein und desselben Laibs **Lx,** vorzusehen im Sinne der Vermeidung von insbesondere untergewichtigen, ggfs. auch übergewichtigen, Scheiben oder Portionen, wobei im Folgenden nur noch von Scheiben gesprochen wird, für Portionen jedoch analog vorgegangen werden kann.

### Durch Verteilung eines Differenzgewichts auf mehrere nachfolgende Scheiben, Figur 5:

Dies soll erreicht werden, indem ein Differenzgewicht **ΔS**, also ein Übergewicht oder Untergewicht, zwischen dem unkorrigierten Ist-Gewicht Gistun einer Scheibe zum Bezugsgewicht, dadurch ausgeglichen wird, dass dieses Differenzgewicht **ΔS** auf eine Gruppe **g** mit einer festgelegten Gruppengröße von z.B. g = 3 nachfolgenden Scheiben mit umgekehrtem Vorzeichen umgelegt und dadurch über eine begrenzte Anzahl nachfolgender Scheiben ausgeglichen wird.

Da aufgrund der Geschwindigkeit beim Aufschneiden das von einer Scheibe z.B. **S1** ermittelte Ist Gewicht **Gist** und damit auch deren Differenzgewicht nicht mehr auf die unmittelbar nächste Scheibe z.B. **S2** angewandt werden kann, sondern die nächste hinsichtlich der Dickeneinstellung beeinflussbare Scheibe in der Regel die übernächste **S3** oder sogar drittnächste Scheibe S4 ist, beginnt die Gruppe aus zum Beispiel **g** = 3 Scheiben mit dieser nächsten beeinflussbaren Scheibe.

Wenn also gemäß **Figur 5** bei einer 1. Scheibe eines Laibs ein Untergewicht **ΔS** von 9 Gramm festgestellt wurde, und dieses auf eine Folge von **g** = 3 spätere Scheiben verteilt werden soll, die nächste noch beeinflussbare Dickeneinstellung jedoch die übernächste, hier diejenige der 3. Scheibe dieses Laibs, ist, wird die bisher geltende Dickeneinstellung, z.B. Dsoll, der 3. bis 5. Scheibe um jeweils eine Scheiben-Korrekturdicke **KSnext** erhöht, die 3 Gramm entspricht.

Es werden sich fast bei jeder aufzuschneidenden Scheibe (z.B. **S7**) mehrere Scheiben-Korrekturdicken addieren oder subtrahieren (z.B. +3+2+0), da jede Scheibe (z.B. **S7**) gleichzeitig in mehreren von vorhergehenden, aufeinanderfolgenden, aufgeschnittenen und verwogenen, Scheiben ausgelösten Korrektur-Gruppen **g1** = **S3** - **S5, g2** = **S4** - **S6, g3** = **S5** - **S7** liegen kann.

Allgemein ausgedrückt wird somit wie folgt vorgegangen:
- von jeder abgetrennten Scheibe (z.B. **S3**) wird das Differenz-Gewicht **ΔS** von deren unkorrigiertem Ist-Gewicht **Gistun** zum Bezugs-Gewicht **Gbezug** ermittelt,
- daraus wird durch Division durch eine Gruppengröße **g,** z.B. g = 3 und dem Wechseln des Vorzeichens ein Scheiben-Korrekturgewicht **KSnext** ermittelt,
- für die Gruppe **g3** der nächsten hinsichtlich der Dickeneinstellung zeitlich noch erreichbaren Scheiben (z.B. **S5** bis **S7)** werden deren vorgegebenen jeweiligen Dickeneinstellungen **(D5** bis **D7)** um die Scheiben-Korrekturdicken **KSnext** korrigiert,
- vor dem Aufschneiden jeder Scheibe (z.B. **S5**) werden alle aus den vorangehenden Gruppen (g1, g2...) diese Scheibe **(S5)** betreffenden relevanten Scheiben-Korrekturdicken **KSnext** für die Korrektur der vorgegebenen Dickeneinstellung für diese Scheibe (z.B. **D5**) angewandt.

Dabei stellt die 1. Scheibe eines Laibs einen Sonderfall dar:
Die 1. Scheibe des 1. Laibs einer Charge wird mit einer vorgegebenen Dickeneinstellung **D1,** häufig der sich rechnerisch aus dem Gesamtgewicht des Laibs und dem gewünschten Bezugsgewicht ergebenden Dickeneinstellung **Dsoll,** aufgeschnitten.

Die vorgegebene Dickeneinstellung für die 1. Scheibe **S1** eines der folgenden Laibe **L2, L3...** wird dagegen meist bereits um Scheiben-Korrekturdicken korrigiert, wie oben beschrieben, indem der Wechsel von der letzten Scheibe eines Laibs zur ersten Scheibe des nachfolgenden Laibs innerhalb einer Folge unberücksichtigt bleibt, also die Gruppe **g** auch über die Grenze zwischen zwei aufeinanderfolgenden Laiben hinweg reicht.

Allgemein ausgedrückt wird auch für die erste oder die ersten Scheiben eines Laibs, der nicht der erste Laib einer Charge ist, die vorgegebene Dickeneinstellung dieser Scheibe um alle für diese Scheibe relevanten Scheiben-Korrekturdicken **KSnext** aus den vorangehenden, relevanten Gruppen **g1, g2...** korrigiert, wobei die Gruppen **g1, g2...** über die Grenze zwischen zwei aufeinanderfolgenden Laiben **L1, L2** hinweg reichen können.

### Kombination Laib-Korrekturwerte und Scheiben-Korrekturwerte:

Laib-Korrekturwerte **KL** und Scheiben-Korrekturwerte **KS** können auch in Kombination miteinander eingesetzt werden:
Da bei den meisten Arten von Laiben **L** die Unterschiede zwischen den verschiedenen Laiben **L1** bis **Lz** einer Charge prozentual größer sind, als innerhalb eines Laibs **L3** die Unterschiede zwischen zwei aufeinanderfolgenden, mit der Soll-Dicke **Dsoll** abgeschnittenen, Scheiben **Snext-1, Snext,** ist in aller Regel der Laib-Korrekturwert **KL** der primär zu berücksichtigende Korrekturwert, und der Scheiben-Korrekturwert **KS** der sekundär zu berücksichtigende Korrekturwert.

Wenn also, insbesondere ab dem 2. Laib, ein ermittelter, von Null abweichender, Scheiben-Korrekturwert mit negativem Wert **-KS** existiert, soll dieser unberücksichtigt bleiben, falls gleichzeitig ein von Null abweichender Laib-Korrekturwert mit positivem Wert **+KL** für die gleiche Scheibe ermittelt wird.

Ist dagegen für die gleiche Scheibe S zusätzlich ein positiver Scheiben-Korrekturwert **+KS** ermittelt worden, so ist derjenige positive Korrekturwert **+KL, +KS** anzuwenden, der höher ist, also entweder der (positive) Laib-Korrekturwert **+KL** oder der (positive) Scheiben-Korrekturwert **+KS.** Das gleiche gilt bei jeweils negativen Korrekturwerten.

Hinsichtlich der in den **Figuren 1a bis 1d** rudimentär dargestellten Aufschneidemaschine **1** zum Abschneiden von Scheiben **S** von Laiben **L** nacheinander, insbesondere unter Anwendung des beschriebenen Verfahrens, umfasst eine solche Aufschneidemaschine **1** zum Einen eine Haltevorrichtung **2** für den aufzuschneidenden Laib **L.**

Die Haltevorrichtung **2** ist hier ein umfänglich geschlossenes und an den stirnseitigen Enden offenes Formrohr **2** mit einem über seine gesamte Länge gleichbleibenden Querschnitt seines inneren Freiraumes **7.**

Ferner umfasst die Aufschneidemaschine **1** eine Schneideinheit **6,** bei der insbesondere ein um eine Messer-Achse **3'** rotierendes, kreisscheibenförmiges oder sichelförmiges Messer 3, welches vom vorderen Ende des Laibs **L** eine Scheibe **S** abtrennt, die aus dem Schneid-Ende **2a** des Formrohres **2** vorsteht, sowie eine Steuerung **1*,** die alle beweglichen Teile der Aufschneidemaschine **1** steuert.

Erfindungsgemäß ist die Steuerung **1*** so ausgebildet, dass sie dazu ausgebildet ist ist, die Aufschneidemaschine **1** so anzusteuern, dass diese das beschriebene Verfahren zur Variation des Gewichts der Scheiben **S** durchführt.

Erfindungsgemäß umfasst die Aufschneidemaschine **1** außer dem Formrohr **2** einen vom hinteren offenen Ende, dem Belade-Ende **2b,** passgenau in dessen inneren Freiraum **7** einfahrbaren, am vorderen Ende einer Kolbenstange **12** befestigten, Längs-Pressstempel **4** zum Verpressen des Laibs **L** in Längsrichtung **10,** bis dieser den vor dem Längs-Pressstempel **4** verbleibenden Innenraum **7** möglichst vollständig ausfüllt und einen ebenfalls über seine gesamte Länge gleichmäßigen Querschnitt entsprechend dem Querschnitt des Innenraumes **7** besitzt.

Ferner ist meist eine Anschlagplatte **13** für den aus dem Formrohr **2** nach vorne mittels des Längs-Pressstempels **4** herausgeschobenen Laib **L** vorhanden, deren Abstand **A** zum vorderen Ende, dem Schneid-Ende **2a** des Formrohres **2,** eingestellt werden kann.

Die Anschlagplatte **13** kann im vollständig an die vordere Stirnfläche des Formrohres **2** herangefahrenen Zustand auch als Frontanschlag beim Längsverpressen des Laibs **L** im Formrohr **2** durch den Längs-Pressstempel **4** dienen.

Das Messer **3** wird dagegen meist an einer immer gleichen Längsposition, insbesondere relativ zum Formrohr **2,** insbesondere unmittelbar an der vorderen Stirnfläche des Formrohres **2,** z.B. in einer 1. Querrichtung **11.1** hin und her bewegt und dadurch von dem inzwischen wieder bis zur Anschlagplatte **13** vorwärtsgeschobenen Laib **L** jeweils eine Scheibe **S** abtrennt.

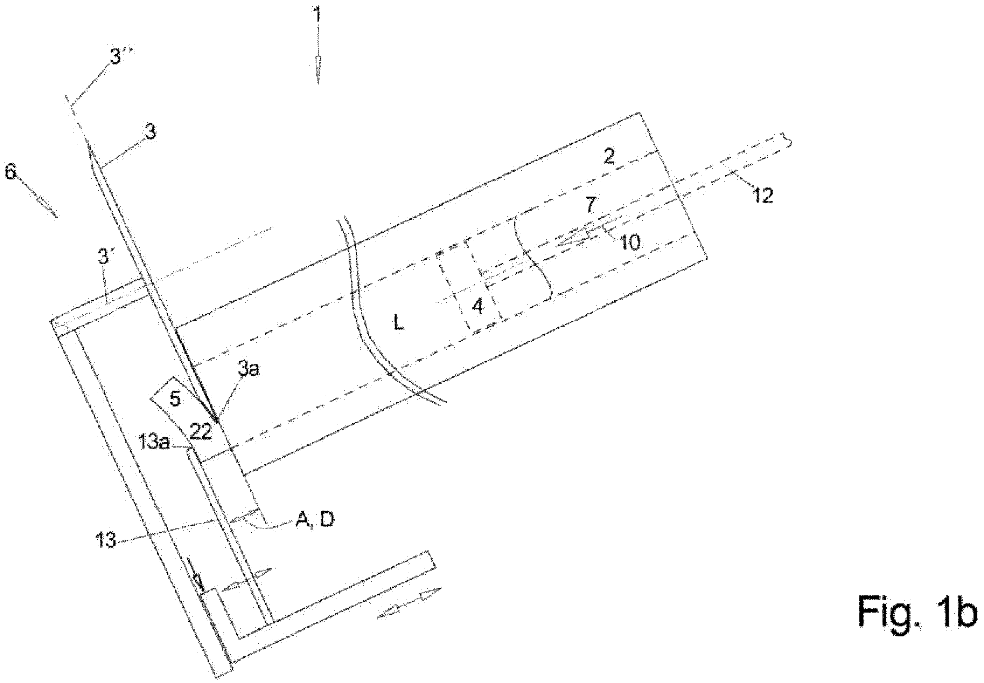

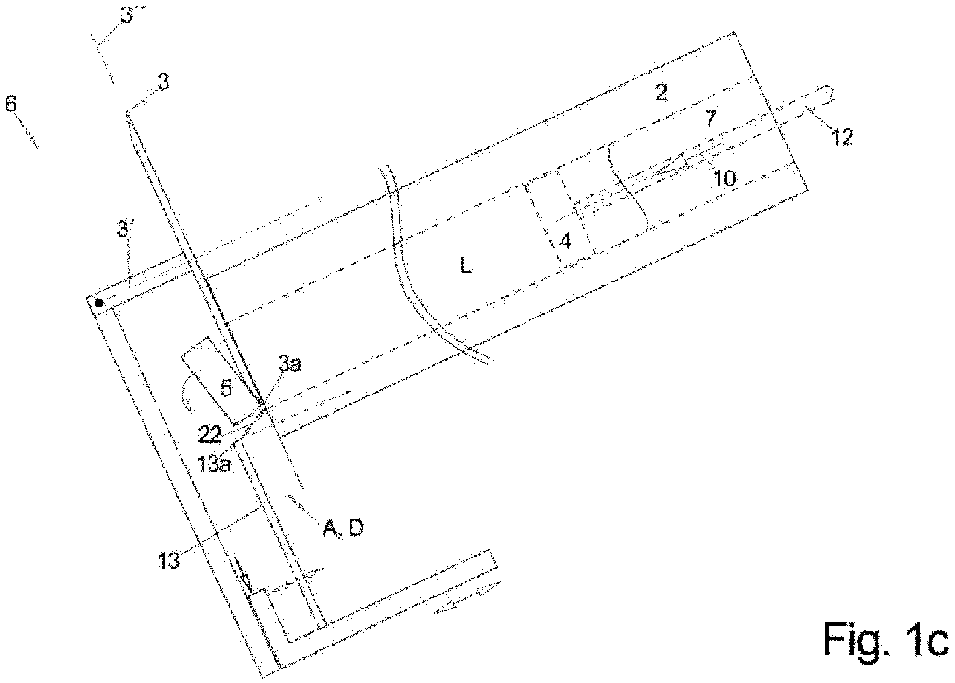

Wie die Abfolge der **Figuren 1a bis 1d** erkennen lässt, deckt vor dem Kontaktieren des Laibs **L** durch die Schneidkante **3a** des Messers 3 die Abdeckplatte **13** - betrachtet in Längsrichtung **10** - den gesamten Querschnitt des Formrohres **2** ab, und bewegt sich beim zunehmenden Eintauchen der Schneidkante **3a** des Messers **3** in den Laib **L** mit dieser zusammen z.B. in dieser ersten Querrichtung **11.1,** so dass die sich dabei durch den Spalt **17** zwischen Schneidkante **3a** und der Funktionskante **13a** der Abdeckplatte **13** hindurchschiebend Scheibe **S** zum Schluss über diese Oberkante **13a** - die angeschrägt sein kann oder nicht - der Anschlagplatte **13** herabkippen und auf den Abförderer **8** fallen kann, wie in den **Figuren 1b** **und** **1c** zu erkennen.

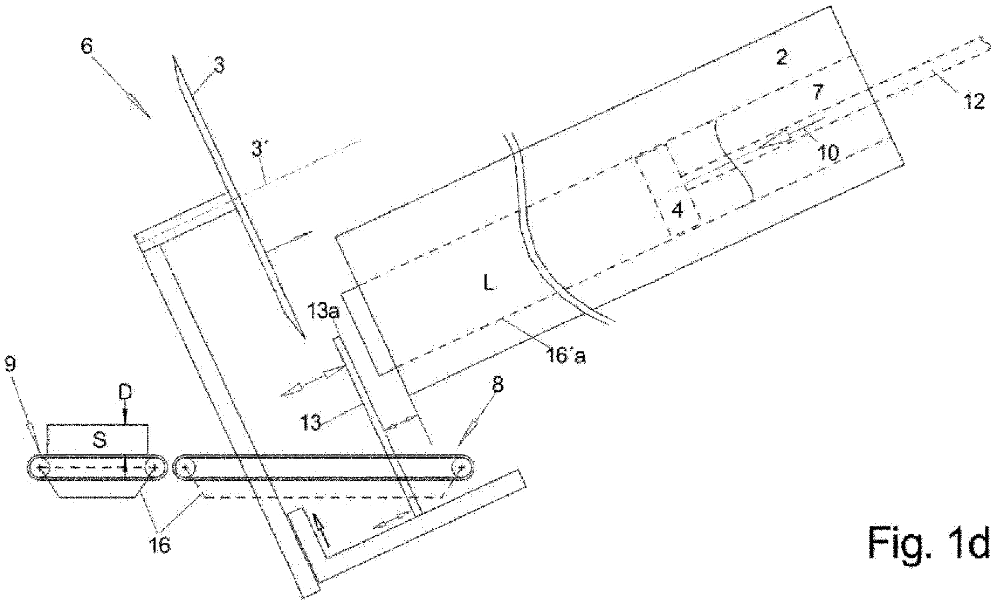

Anschließend bewegen sich Messer **3** und Anschlagplatte **13** entgegen der Eintauchrichtung, also in der Querrichtung **11.1,** zurück, wie in **Figur 1d** dargestellt, und der Laib **L** wird wiederum über das vordere Schneidende 2a des Formrohres **2** hinausgeschoben bis zur Anlage an der Anschlagplatte **13,** die auf den gewünschten Abstand **A,** insbesondere die Dickeneinstellung **D,** eingestellt wiederum in Längsrichtung **10** betrachtet den gesamten Querschnitt des inneren Formhohlraumes **7** abdeckt.

Wie am besten die Vergrößerung der **Figur 1a** zeigt, können in Längsrichtung **10** betrachtet Anschlagplatte **13** und Messer **3** in der Seitenansicht quer zur Eintauchrichtung **11.1** betrachtet geringfügig überlappen, wenn durch entsprechende Anschrägungen an den einander zugewandten Randbereichen sichergestellt ist, dass der dazwischen verbleibende Spalt **17** groß genug ist, damit sich die abgetrennte Scheibe **S** durch den Spalt **17** hindurch bewegen kann.

Eine solche Aufschneidemaschine **1** verfügt weiter über eine Waage **16** - siehe **Figur 1d** -, die das Ist-Gewicht **Gist** jeder abgetrennten Scheibe **S** einzeln ermittelt, sowie eine Bedieneinheit **14** - siehe **Figur 1a** - mit der insbesondere einerseits die Vorschub-Strecke, um die der Längs-Pressstempel **4** den Laib **L** vorwärts schiebt, vor dem Abtrennen der nächsten Scheibe eingestellt werden kann. Andererseits kann darauf basierend auch der Abstand **A** der Anschlagplatte **13** zu der Axialposition, an der sich das Messer 3 beim Abtrennen einer Scheibe **S** befindet, eingestellt werden, manuell und insbesondere automatisch durch die Steuerung **1*.**

Die vor dem Abtrennen einer Scheibe **S** festzulegende Dickeneinstellung **D** ist diese Vorschubstrecke, wobei die Vorschubstrecke in aller Regel nicht nur genauso groß, sondern etwas größer ist als der eingestellte Abstand **A,** jedoch beide Parameter das spätere Gewicht **Gist** der abgetrennten Scheibe **S** beeinflussen.

Die Waage **16** befindet sich jedoch meist nicht unter dem Abförderer **8,** auf den die abgetrennte Scheibe **S** direkt herabfällt, da aufgrund der Erschütterungen durch das Auftreffen der herab gefallenen Scheibe die exakte Gewichtsbestimmung sehr schwierig ist, sondern in der Regel erst unter dem unmittelbar darauf nachfolgenden weiteren Abförderer **9.**

Wenn technisch möglich, sollte jedoch das Wiegen möglichst weit stromaufwärts und unmittelbar nach dem Abtrennen der Scheibe **S,** also insbesondere direkt nach dem Auftreffen auf dem Abförderer **8,** erfolgen, denn das Gewicht **Gist** der soeben abgetrennten Scheibe **S** sollte möglichst früh bekannt sein, um davon abhängig die Dicken-Einstellungen **D** danach abzutrennender Scheiben **S** möglichst schnell beeinflussen zu können.

Der Laib **L** kann nicht nur in Längsrichtung **10** durch einen Längs-Pressstempel **4** verpresst werden, sondern auch - vorzugsweise vorher oder gleichzeitig - durch einen Quer-Pressstempel **5** in einer der Querrichtungen, vorzugsweise ebenfalls der ersten Querrichtung **11.1,** in der sich das Messer **3** beim Abtrennen bewegt.

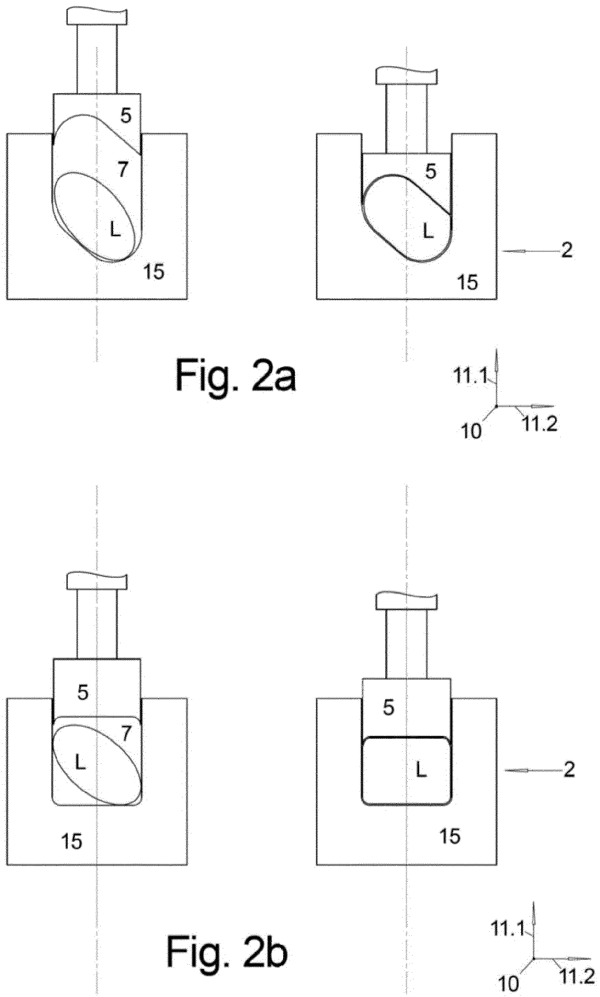

Entsprechende Ausbildungen von Formrohren **2** zeigen - betrachtet in der Längsrichtung **10** - die **Figuren 2a****, b:**
Dabei besteht das in Längsrichtung **10** betrachtete Formrohr **2** in Umfangsrichtung aus zwei Bauteilen, nämlich einer in dieser Blickrichtung U-förmigen Querpress-Wanne **15,** in deren offene Seite hinein passend ein Quer-Pressstempel **5** in einer Querrichtung, vorzugsweise der ersten Querrichtung **11.1,** eingefahren wird, und den zuvor eingelegten Laib **L,** der im unverpressten Ausgangszustand einen etwa elliptischen Querschnitt besitzt, in dieser Querrichtung **11.1** verpresst, bis dieser zumindest teilweise einen Querschnitt entsprechend dem Querschnitt **7'** des verbleibenden inneren Freiraumes **7** im Formrohr **2** annimmt.

Der Quer-Pressstempel **5** kann dabei bis auf eine feste Querposition vorwärts gefahren werden, so dass dann der Querschnitt **7'** des inneren Freiraumes 7 im Formrohr **2** mit der Frontfläche **4a** des Längs-Pressstempels **4** übereinstimmt, die dann eine nicht veränderbare Form und Größe besitzen kann.

Bevorzugt ist der Quer-Pressstempel **5** jedoch kraftgesteuert, so dass dessen endgültige Pressposition nicht feststeht. Dann muss der Längs-Pressstempel **4** in der Bewegungsrichtung des Quer-Pressstempels **5** einen variablen Querschnitt besitzen, der sich automatisch an den Querschnitt **7'** des momentanen Innenraumes **7** des Formrohres **2** anpasst.

Während in **Figur 2b** der innere Freiraum **7** der Quer-Presswanne 15 einen Querschnitt **7'** besitzt, der etwa rechteckig-förmig mit abgerundeten Kanten ist, besitzt in **Figur 2a** der innere Freiraum **7** einen Querschnitt **7',** der einen gegenüber der tiefer herabreichenden Seitenwand **15a** der Quer-Presswanne **15** stark gerundeten und schräg stehenden Boden aufweist, während die Frontfläche des Quer-Pressstempels **5** eine analog gegenläufige Kontur aufweist, sodass dies einen schräg stehenden, etwa parallelogramm-förmigen oder langloch-förmigen inneren Querschnitt **7'** mit gerundeten Kanten im geschlossenen Formrohr **2** ergibt.

Ein solcher Querschnitt **7'** des Innenraumes **7** kommt dem meist elliptischen Ausgangsquerschnitt der Laibe **L** näher als ein rechteckiger Querschnitt und erfordert eine geringere Querverpressung als bei der Querschnittsform **7'** gemäß **Figur 2b****,** in der die Breite des inneren Freiraumes **7** meist geringer gewählt wird als die größte Erstreckung des etwa elliptischen Querschnittes der unverpressten Laibe **L.**

Die Steuerung **1*** ist mit der Waage **16,** mit der Bedieneinheit **14** und ebenso mit den Antrieben aller vorhandenen Pressstempel **4, 5** sowie den Antrieben für die Schneideinheit **6,** insbesondere des Messers, **3,** signaltechnisch verbunden, sodass von der Steuerung **1*** alle Bewegungen der Aufschneidemaschine **1** automatisch gesteuert werden können.

### BEZUGSZEICHENLISTE

- **1**: Schneidemaschine
- **1***: Steuerung
- **2**: Formrohr
- **2a**: Schneid-Ende
- **2b**: Belade-Ende
- **3**: Messer
- **3'**: Messer-Achse
- **3"**: Messer-Ebene
- **3a**: Schneidkante
- **4**: Längs-Pressstempel
- **5**: Quer-Pressstempel
- **6**: Schneideinheit
- **7**: Formrohr-Hohlraum, innerer Freiraum
- **7'**: Querschnitt
- **8**: Abförderer
- **9**: Abförderer
- **10**: Längsrichtung, axiale Richtung, Vorschubrichtung
- **11**: Querrichtung
- **11.1**: erste Querrichtung
- **11.2**: zweite Querrichtung
- **12**: Kolbenstange
- **13**: Anschlagplatte
- **14**: Bedieneinheit
- **15**: Querpress-Wanne
- **15a, b**: Seitenwand
- **16**: Waage
- **A**: Abstand
- **D, D1** - **Dn**: (rechnerische) Dickeneinstellung der einzelnen Scheiben
- **Dsoll**: rechnerische Dickeneinstellung
- **Dist**: Ist-Dicke
- **d**: Scheibendicke
- **f**: Folge
- **g**: Gruppe
- **k, k1, k2**: Korrekturfaktor
- **Gbezug**: Bezugsgewicht
- **Gist**: Ist-Gewicht
- **Gistun**: unkorrigiertes Ist-Gewicht
- **Gsoll**: Soll-Gewicht
- **Gsollun**: unkorrigiertes Soll-Gewicht
- **Gnenn**: Nenn-Gewicht
- **KL, KL1, KL2**: Laib-Korrekturgewicht
- **KL', KL1', KL2'**: Laib-Korrekturdicke
- **KS, KS1, KS2**: Scheiben-Korrekturgewicht
- **KS', KS1', KS2'**: Scheiben-Korrekturdicke
- **L1 bis Lz**: Laib
- **TB**: Toleranzbereich
- **TU**: Toleranz-Untergrenze
- **TO**: Toleranz-Obergrenze
- **ΔL**: Differenzgewicht
- **ΔLun**: unkorrigiertes Differenzgewicht
- **z.B. ΔL2(S1)**: Differenzgewicht der Scheibe S1 im Laib L2
- **S1 bis Sn**: Scheibe

## Patentansprüche

1. Verfahren zum Aufschneiden einer Charge von Laiben (L1 bis Lz) in Scheiben, mit automatischer Variation der Dickeneinstellungen (D) für die abzutrennenden Scheiben (S1 bis Sn), umfassend die folgenden Schritte:
A) Anordnen jedes Laibs (L1 bis Lz) in einer Haltevorrichtung (2) zum Halten des Laibs (z.B. Lx) und zum Vorwärtsschieben des Laibs während des Aufschneidens in einer Vorschubrichtung (10'), wobei jeder Laib (L1 bis Lz) jeweils in einem umfänglich geschlossenen Formrohr (2) der Haltevorrichtung (2) mit über die gesamte Länge konstantem Querschnitt (7') des Formrohr-Hohlraumes (7) unter einem Messdruck aufgenommen wird,
B) Ermitteln eines Volumens des jeweiligen Laibes (z.B. Lx) anhand des Querschnitts (7') und einer Länge eines unter dem Messdruck stehenden Teils des Formrohr-Hohlraumes (7), wobei die Länge aus einer Position eines Längs-Pressstempels (4) der Haltevorrichtung (2) bestimmt wird, und Bestimmen des Laib-Gewichts des jeweiligen Laibs (z.B. Lx) auf Basis des ermittelten Volumens
C) Errechnen einer maximalen Anzahl (n) der aus diesem Laib (z.B. Lx) jeweils herstellbaren solchen Scheiben (S1 bis Sn) mit einem vorgegebenen Bezugs-Gewicht (Gbezug) auf Basis des in Schritt B bestimmten Laib-Gewichts und des Bezug-Gewichts,
D) Berechnen einer für alle Scheiben (S1 bis Sn) dieses Laibes (z.B. Lx) gleichen Soll-Dicke (Dsoll) als Start-Dickeneinstellung, wobei von einer festen Korrelation zwischen Dicke und Gewicht einer Scheibe ausgegangen wird, und die Soll-Dicke so bestimmt wird, dass das gemäß der festen Korrelation für eine Scheibe mit der Soll-Dicke prognostizierte Gewicht der Scheibe (S1 bis Sn) mindestens dem vorgegebenen Bezugs-Gewicht (Gbezug) entspricht,
I) Aufschneiden des ersten Laibs in Scheiben gemäß der Start-Dickeneinstellung (Dsoll), wobei der Laib durch den Längs-Presstempel (4) in der Vorschubrichtung (10') vorwärts geschoben wird, und
E) Ermitteln des Ist-Gewicht (Gist) jeder abgetrennten Scheibe (S1 bis Sn) des ersten Laibs,
**dadurch gekennzeichnet, dass**
F) vor dem Aufschneiden eines jeden neuen Laibes (z.B. L5) jeweils für jede Scheiben-Nummer, bei der bei einem der vorhergehenden Laibe (z.B. L1 bis L4) einer Folge (f, z.B. f=4) von Laiben ein unkorrigiertes Ist-Gewicht (z.B. Gistun(L4)) um ein unkorrigiertes Differenz-Gewicht (z.B. ΔL4un) von dem Bezugs-Gewicht (Gbezug) abweicht, ein Scheiben-Korrekturgewicht (z.B. KL5) in Abhängigkeit der unkorrigierten Differenz-Gewichte (z.B. ΔL4un) für diese Scheibennummer in der Folge (f) der vorhergehenden Laibe (z.B. L1 bis L4) ermittelt wird,
G) die Dickeneinstellungen (D1 bis Dn) für die Scheiben-Nummern (S1 bis Sn) dieses neuen Laibes (z.B. L5) gegenüber der Start-Dickeneinstellung (Dsoll) dieses Laibes (z.B. L5) um solche Scheiben-Korrekturdicken (z.B. KL5') korrigiert werden, die dem jeweiligen Scheiben-Korrekturgewicht (z.B. KL5) gemäß der festen Korrelation entsprechen,
H) der neue Laib (z.B. L5) mit den so korrigierten Dickeneinstellungen (D1 bis Dn) für die einzelnen Scheibennummern in Scheiben (S1 bis Sn) aufgeschnitten wird, wobei wieder das Ist-Gewicht jeder abgetrennten Scheibe ermittelt wird, und wobei:
- das unkorrigierte Ist-Gewicht (z.B. Gistun(L4)) einer Scheibe (z.B. S1) für jeden Laib ab dem zweiten Laib ermittelt wird, indem vom gemessenen Ist-Gewicht (z.B. Gist(L4)) der Scheibe (z.B. S1) das Scheiben-Korrekturgewicht (z.B. KL4) abgezogen wird, welches bei der Berechnung der korrigierten Dickeneinstellung (KL4') für diese Scheibe (S1) dieses Laibs (L4) berücksichtigt wurde, und wobei das unkorrigierte Ist-Gewicht (Gistun(L1)) jeder Scheibe des ersten Laibs (L1) mit dem Ist-Gewicht (Gist(L1)) dieser Scheibe übereinstimmt,
- das unkorrigierte Differenz-Gewicht (z.B. ΔL4un = Gistun(L4) - Gbez) einer Scheibe (z.B. S1) für jeden Laib ermittelt wird, indem man das Bezugsgewicht (Gbez) vom unkorrigierten Ist-Gewicht (z.B. Gistun(L4)) der Scheibe abzieht,
- das Korrekturgewicht (z.B. KL5) für eine Scheibe (z.B. S1) des neuen Laibs (L5) ermittelt wird als Mittelwert über die unkorrigierten Differenzgewichte (ΔL4un, ΔL3un, ΔL2un, ΔL1un) der Scheiben mit der gleichen Scheibennummer (z.B. S1) in der Folge (f) von vorhergehenden Laiben (L4, L3, L2, L1), aber mit umgekehrtem Vorzeichen.

2. Verfahren nach Anspruch 1,
**dadurch gekennzeichnet, dass**
- die Folge (f) der berücksichtigten vorhergehenden Laibe (Lx-f bis Lx-1) maximal 10, besser maximal 8, besser maximal 6, besser maximal 4, beträgt.

3. Aufschneidemaschine (1) zum Aufschneiden von Laiben (L) in Scheiben (S1 bis Sn) mit einem Ist-Gewicht (Gist) möglichst vieler einzelner Scheiben (S1 bis Sn) innerhalb eines Toleranz-Bereiches (TB) durch Variation der Dickeneinstellung (D), umfassend
- eine Haltevorrichtung (2) zum Halten des aufzuschneidenden Laibes (L),
- eine Schneideinheit (6) zum Abtrennen von Scheiben (S1 bis Sn) von dem aufzuschneidenden Laib (L), wobei die Schneideinheit (6) steuerbar ist hinsichtlich der Dickeneinstellung (D) für die die abzutrennende Scheibe (S1 bis Sn) beeinflussenden Parameter,
- eine Waage (16) zum automatischen Wiegen aller abgetrennten Scheiben (S1 bis Sn) oder Portionen,
- eine Steuerung (1*), die alle beweglichen Komponenten der Vorrichtung steuert,
**dadurch gekennzeichnet, dass**
die Steuerung (1*) in der Lage ist, das Verfahren gemäß einem der vorhergehenden Ansprüche durchzuführen.

## Claims

1. A Method for slicing a batch of loaves (L1 to Lz) into slices, by automatically varying the thickness adjustments (D) for the slices (S1 to Sn) to be cut off, comprising the following steps:
A) Arranging each loaf (L1 to Lz) in a holding device (2) for holding the loaf (e.g. Lx) and advancing the loaf during slicing in a feed direction (10'), wherein each loaf (L1 to Lz) is received each under a measuring pressure in a circumferentially closed forming tube (2) of the holding device (2) with a cross section (7') of the forming tube cavity (7) which is constant over the entire length,
B) determining a volume of the respective loaf (e.g. Lx) on the basis of the cross section (7') and a length of a part of the forming tube cavity (7) which is under measuring pressure, the length being determined from a position of a longitudinal press die (4) of the holding device (2), and determining the loaf weight of the respective loaf (e.g. Lx) based on the determined volume,
C) calculating a maximum number (n) of such slices (S1 to Sn) with a predetermined reference weight (Gbezug) which can be produced from this loaf (e.g. Lx), respectively, based on the weight of the loaf determined in step B and the reference weight,
D) calculating a nominal thickness (Dsoll), which is the same for all slices (S1 to Sn) of this loaf (e.g. Lx), as a starting thickness adjustment, wherein a fixed correlation is assumed between weight and thickness of a slice, and the nominal thickness is determined in such a way that the weight of the slice (S1 to Sn) predicted according to the fixed correlation for a slice with the nominal thickness corresponds to at least the predetermined reference weight (Gbezug),
I) slicing the first loaf into slices according to the starting thickness adjustment (Dsoll), wherein the loaf is pushed forward in the feed direction (10') by means of the longitudinal press die (4), and
E) determining the actual weight (Gist) of each cut off slice (S1 to Sn) of the first loaf,
**characterized in that**
F) before slicing of each new loaf (e.g. L5), in each case for each slice number at which, in one of the preceding loaves (e.g. L1 to L4) of a sequence (f, e.g. f=4) of loaves, an uncorrected actual weight (e.g. Gistun(L4)) differs by an uncorrected difference weight (e.g. ΔL4un) from the reference weight (Gbezug), a slice correction weight (e.g. KL5) is determined as a function of the uncorrected difference weights (e.g. ΔL4un) of this slice number in the sequence (f) of the preceding loaves (e.g. L1 to L4),
G) the thickness adjustments (D1 to Dn) for the slice numbers (S1 to Sn) of this new loaf (e.g. L5) are corrected with respect to the starting thickness adjustment (Dsoll) of this loaf (e.g. L5) by such slice correction thicknesses (e.g. KL5') which correspond to the respective slice correction weight (e.g. KL5) according to the fixed correlation,
H) the new loaf (e.g. L5) is cut into slices (S1 to Sn) with the thickness adjustments (D1 to Dn) thus corrected for the individual slice numbers, wherein the actual weight of each cut off slice is determined again, and wherein:
- the uncorrected actual weight (e.g. Gistun(L4)) of a slice (e.g. S1) for each loaf is determined starting with the second loaf by subtracting, from the measured actual weight (e.g. Gist(L4)) of the slice (e.g. S1), the slice correction weight (e.g. KL4) which was taken into account when calculating the corrected thickness adjustment (KL4') for this slice (S1) of this loaf (L4), and wherein the uncorrected actual weight (Gistun(L1)) of each slice of the first loaf (L1) corresponds to the actual weight (Gist(L1)) of this slice,
- the uncorrected difference weight (e.g. ΔL4un = Gistun(L4) - Gbez) of a slice (e.g. S1) for each loaf is determined by subtracting the reference weight (Gbez) from the uncorrected actual weight (e.g. Gistun(L4)) of the slice,
- the correction weight (e.g. KL5) for a slice (e.g. S1) of the new loaf (L5) is determined as mean value of the uncorrected difference weights (ΔL4un, ΔL3un, ΔL2un, ΔL1un) of the slices with the same slice number (e.g. S1) in the sequence (f) of preceding loaves (L4, L3, L2, L1), but with reverse sign.

2. The method according to claim 1,
**characterized in that**
- the sequence (f) of the considered preceding loaves (Lx-f to Lx-1) is at most 10, better at most 8, better at most 6, better at most 4 loaves.

3. A slicing machine (1) for slicing loaves (L) into slices (S1 to Sn) having an actual weight (Gist) of as many individual slices (S1 to Sn) as possible within a tolerance range (TB) by varying the thickness adjustment (D), comprising
- a holding device (2) for holding the loaf (L) to be sliced,
- a cutting unit (6) for cutting off slices (S1 to Sn) from the loaf (L) to be sliced, the cutting unit (6) being controllable with respect to the thickness adjustment(D) for the parameters influencing the slice (S1 to Sn) to be cut off,
- a scale (16) for automatic weighing of all slices (S1 to Sn) or portions to be cut off,
- a control (1*) which controls all movable components of the device,
**characterized in that**
the control (1*) is able to perform the method according to any of the preceding claims.

## Revendications

1. Procédé pour découper en tranches un lot de pains (L1 à Lz), avec variation automatique des réglages d'épaisseur (D) pour les tranches à découper (S1 à Sn), comprenant les étapes suivantes consistant à :
A) placer chaque pain (L1 à Lz) dans un dispositif de maintien (2) pour maintenir le pain (par exemple Lx) et pour faire avancer le pain pendant le tranchage dans une direction d'avance (10'), chaque pain (L1 à Lz) étant logé sous une pression de mesure dans un tube profilé (2), fermé sur son pourtour, du dispositif de maintien (2), la section transversale (7') étant constante sur toute la longueur de la cavité de tube profilé (7),
B) déterminer un volume du pain respectif (par exemple Lx) à l'aide de la section transversale (7') et d'une longueur d'une partie de la cavité de tube profilé (7) soumise à la pression de mesure, la longueur étant déterminée à partir d'une position d'un poinçon longitudinal (4) du dispositif de maintien (2), et déterminer le poids du pain respectif (par exemple Lx) sur la base du volume déterminé,
C) calculer un nombre maximal (n) de tranches (S1 à Sn) pouvant être produites à partir de ce pain (par exemple Lx) avec un poids de référence prédéfini (Gbezug) sur la base du poids du pain déterminé à l'étape B et du poids de référence,
D) calculer une épaisseur de consigne (Dsoll) identique pour toutes les tranches (S1 à Sn) de ce pain (par exemple Lx) comme réglage d'épaisseur de départ, en partant du principe qu'il existe une corrélation fixe entre l'épaisseur et le poids d'une tranche, et déterminer l'épaisseur de consigne de telle sorte que le poids de la tranche (S1 à Sn), pronostiqué pour une tranche ayant l'épaisseur de consigne selon la corrélation fixe, corresponde au moins au poids de référence prédéfini (Gbezug),
I) découper le premier pain en tranches conformément au réglage d'épaisseur de départ (Dsoll), le pain étant poussé vers l'avant dans la direction d'avance (10') par le poinçon longitudinal (4), et
E) déterminer le poids réel (Gist) de chaque tranche coupée (S1 à Sn) du premier pain,
**caractérisé en ce que**
F) avant de trancher chaque nouveau pain (par exemple L5), pour chaque numéro de tranche pour lequel, dans l'un des pains précédents (par exemple L1 à L4) d'une série (f, par exemple f = 4) de pains, un poids réel non corrigé (par exemple Gistun(L4)) a dévié du poids de référence (Gbezug) d'un poids différentiel non corrigé (par exemple ΔL4un), un poids de correction de tranche (par exemple KL5) est déterminé en fonction des poids différentiels non corrigés (par exemple ΔL4un) pour ce numéro de tranche dans la série (f) des pains précédents (par exemple L1 à L4),
G) les réglages d'épaisseur (D1 à Dn) pour les numéros de tranche (S1 à Sn) de ce nouveau pain (par exemple L5) sont corrigés par rapport au réglage d'épaisseur de départ (Dsoll) de ce pain (par exemple L5) afin d'obtenir des épaisseurs de correction de tranche (par exemple KL5') qui correspondent au poids de correction de tranche respectif (par exemple KL5) conformément à la corrélation fixe,
H) le nouveau pain (par exemple L5) est découpé en tranches (S1 à Sn) avec les réglages d'épaisseur ainsi corrigés (D1 à Dn) pour les différents numéros de tranche, le poids réel de chaque tranche découpée étant à nouveau déterminé, et
- le poids réel non corrigé (par exemple Gistun(L4)) d'une tranche (par exemple S1) est déterminé pour chaque pain à partir du deuxième pain en soustrayant du poids réel mesuré (par exemple Gist(L4)) de la tranche (par exemple S1) le poids de correction de tranche (par exemple KL4) qui a été pris en compte dans le calcul du réglage d'épaisseur corrigé (KL4') pour cette tranche (S1) de ce pain (L4), et le poids réel non corrigé (Gistun(L1)) de chaque tranche du premier pain (L1) correspond au poids réel (Gist(L1)) de cette tranche,
- le poids différentiel non corrigé (par exemple ΔL4un = Gistun (L4) - Gbez) d'une tranche (par exemple S1) est déterminé pour chaque pain en soustrayant le poids de référence (Gbez) du poids réel non corrigé (par exemple Gistun(L4)) de la tranche,
- le poids de correction (par exemple KL5) pour une tranche (par exemple S1) du nouveau pain (L5) est déterminé comme valeur moyenne des poids différentiels non corrigés (ΔL4un, ΔL3un, ΔL2un, ΔL1un) des tranches portant le même numéro de tranche (par exemple S1) dans la série (f) des pains précédents (L4, L3, L2, L1), mais avec un signe inversé.

2. Procédé selon la revendication 1,
**caractérisé en ce que**
- la série (f) des pains précédents pris en compte (Lx-f à Lx-1) est au maximum de 10, mieux au maximum de 8, mieux au maximum de 6, mieux au maximum de 4.

3. Machine à trancher (1) pour découper des pains (L) en tranches (S1 à Sn) avec un poids réel (Gist) d'autant de tranches individuelles (S1 à Sn) que possible dans une plage de tolérance (TB) en faisant varier le réglage de l'épaisseur (D), comprenant
- un dispositif de maintien (2) pour maintenir le pain (L) à trancher,
- une unité de coupe (6) pour découper des tranches (S1 à Sn) du pain (L) à trancher, l'unité de coupe (6) pouvant être commandée en ce qui concerne le réglage de l'épaisseur (D) pour les paramètres influençant la tranche (S1 à Sn) à découper,
- une balance (16) pour peser automatiquement toutes les tranches (S1 à Sn) ou portions découpées,
- une commande (1*) qui commande tous les composants mobiles du dispositif,
**caractérisé en ce que**
la commande (1*) est capable de mettre en œuvre le procédé selon l'une des revendications précédentes.
